# DEMANDE DE BREVET EUROPEEN

(11) **EP 4 007 061 A1**
(43) Date de publication de la demande: **01.06.2022**
(21) Numéro de dépôt: 21209661.4
(22) Date de dépôt: 22.11.2021
(51) Int. Cl.: H01M 50/581

(54) **SYSTÈME DE CONNEXION PERFECTIONNÉ D'AU MOINS UNE UNITÉ DE STOCKAGE D'ÉNERGIE ÉLECTRIQUE, UNITÉ DE STOCKAGE ET DISPOSITIF D'ALIMENTATION ASSOCIÉ**

(30) Priorité: 25.11.2020 FR 2012147
(71) Demandeur: Commissariat à l'Energie Atomique et aux Energies Alternatives, 75015 Paris (FR)
(72) Inventeur: LEJOSNE, Johann, 38054 GRENOBLE Cedex 09 (FR); JOST, Pierre, 38054 GRENOBLE Cedex 09 (FR); PANARIELLO, Remy, 38054 GRENOBLE Cedex 09 (FR); PERICHON, Pierre, 38054 GRENOBLE Cedex 09 (FR)
(74) Mandataire: Decobert, Jean-Pascal

(57) **Abrégé**

L'invention concerne un système de connexion d'au moins une unité de stockage (2) d'énergie électrique à un circuit d'alimentation, caractérisé en ce qu'il comprend un ensemble de connecteurs électriques (110, 111) présentant une première configuration dans laquelle, dans une première position de l'unité de stockage (2), les connecteurs (110) forment un circuit électrique mettant en continuité électrique l'unité de stockage (2), au moins une unité de stockage (2) adjacente et le circuit d'alimentation, et une deuxième configuration dans laquelle, dans une deuxième position de l'unité de stockage (2), les connecteurs (111) forment un circuit électrique mettant en continuité électrique l'au moins une unité de stockage (2) adjacente et le circuit d'alimentation, et dans laquelle l'unité de stockage (2) n'est pas raccordée électriquement au circuit d'alimentation (41).

## Description

### DOMAINE TECHNIQUE

La présente invention concerne le domaine des systèmes de connexion d'unité de stockage d'énergie électrique. Elle trouve pour application particulièrement avantageuse le domaine de la connexion des batteries de type métal-ion, par exemple des batteries lithium-ion.

### ÉTAT DE LA TECHNIQUE

Une batterie, par exemple de type métal-ion, est composée de cellules unitaires aussi appelées unités de stockage d'énergie électrique ou accumulateurs. Plusieurs unités de stockage peuvent être raccordées électriquement en série ou en parallèle pour former un ensemble d'alimentation, communément désigné module. Plusieurs ensembles raccordés en série ou en parallèle composent un pack batterie.

Une multitude d'appareils est alimentée électriquement par des dispositifs d'alimentation électrique comprenant des unités de stockage d'énergie électrique, telles que des batteries, et notamment des batteries lithium-ion. Lors de la vie d'un appareil, des défauts de fonctionnement des unités de stockage peuvent survenir. Une unité de stockage peut plus particulièrement subir une surchauffe, voire un emballement thermique, durant lesquels la température de l'unité s'élève anormalement. Un risque est alors de propager le défaut de fonctionnement dans le dispositif d'alimentation électrique, par exemple de l'unité de stockage à d'autres unités, voire au reste de l'appareil.

Afin de limiter cela, il existe des dispositifs d'alimentation électrique visant à isoler l'unité de stockage lors d'un défaut de fonctionnement. Par ailleurs, différents systèmes de commutation électrique permettent d'isoler électriquement une unité de stockage défectueuse, par le biais d'actionneurs électroniques ou électromagnétiques. Il est notamment connu de l'état de la technique des dispositifs d'alimentation électrique dans lesquels un actionneur électromagnétique présente une configuration de connexion électrique de l'unité de stockage et une configuration de déconnexion électrique de l'unité de stockage. Le passage de la configuration de connexion à la configuration de déconnexion de l'actionneur peut être activé par la température, par exemple lors d'une surchauffe de l'unité de stockage.

Il est connu du document US 2019/319248 A1 une batterie pour véhicule électrique dans laquelle, en condition anormale et par exemple lors d'une collision, les contacts électriques de modules de batterie ne sont plus en contact l'un avec l'autre, pour améliorer la sécurité de la batterie.

Le document US 2020/083515 A1 décrit un dispositif de connexion/déconnexion entre un accumulateur et une barre de connexion électrique, comprenant un verrou magnétique. Lors d'un défaut de fonctionnement, l'accumulateur chauffe au-delà de la température de Curie de l'aimant du verrou et entraine une déconnexion de l'accumulateur qui tombe par gravité.

Le document US 2011/0223776 A1 décrit un dispositif de connexion de cellules de stockage comprenant des connecteurs amovibles et des membres magnétique de maintien des connecteurs. Lorsqu'une cellule chauffe, la force générée par les membres magnétiques décroît entrainant une déconnexion de la cellule.

Le document US 2020/144587 A1 décrit un dispositif de connexion de batteries comprenant des connecteurs en contact entre eux. Lorsqu'une force supérieure ou égale à une valeur seuil est appliquée sur les connecteurs, la connexion est interrompue.

Toutefois, lorsque plusieurs unités de stockage sont raccordées électriquement entres elles, en série ou en parallèle, la déconnexion d'une unité de stockage défectueuse entraine une perte de la continuité électrique entre l'unité de stockage déconnectée et les autres unités, induisant un arrêt de l'alimentation par ces unités de stockage.

Un objet de la présente invention est donc de proposer une solution permettant une continuité de service d'un dispositif d'alimentation électrique en cas de défaillance d'une unité de stockage.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ

Pour atteindre cet objectif, selon un premier aspect on prévoit un système de connexion d'au moins une unité de stockage d'énergie électrique à un circuit d'alimentation. Le système comprend avantageusement :
- une paroi configurée pour entourer au moins partiellement l'unité de stockage et apte à être solidarisée à l'unité de stockage,
- un ensemble de connecteurs électriques disposés sur la paroi, présentant :
   ∘ une première configuration dans laquelle, dans une première position de l'unité de stockage, les connecteurs forment un circuit électrique mettant en continuité électrique l'unité de stockage, au moins une unité de stockage adjacente dans une première position et le circuit d'alimentation,
   ∘ une deuxième configuration dans laquelle, dans une deuxième position de l'unité de stockage, les connecteurs forment un circuit électrique mettant en continuité électrique l'au moins une unité de stockage adjacente dans sa première position et le circuit d'alimentation, et dans laquelle l'unité de stockage n'est pas raccordée électriquement au circuit d'alimentation.

Un déplacement de l'unité de stockage entre sa première à sa deuxième position permet ainsi au système de connexion de passer entre la première configuration de connecteurs à la deuxième. Dans sa deuxième position, l'unité de stockage peut ainsi être électriquement déconnectée d'une unité de stockage adjacente et du circuit d'alimentation d'un dispositif d'alimentation. Le reste des unités de stockage restent électriquement raccordées au circuit d'alimentation. Le dispositif d'alimentation reste donc fonctionnel et peut fournir une alimentation électrique à un appareil malgré la déconnexion de cette unité de stockage. Une continuité de service du dispositif d'alimentation est donc permise.

Notamment, en cas de défaillance d'une unité de stockage, cette unité peut être déconnectée afin d'éviter la propagation du défaut de fonctionnement, tout en permettant aux unités adjacentes d'alimenter en électricité un appareil.

Un deuxième aspect concerne une unité de stockage d'énergie électrique comprenant le système de connexion selon le premier aspect. Selon un exemple, le système de connexion comprend une paroi formant un godet de l'unité de stockage. Selon un exemple, le système de connexion comprend une paroi formant une gaine de l'unité de stockage. La paroi peut comprendre des éléments de fixation de la paroi sur l'unité de stockage, de façon à être montée amovible sur l'unité de stockage.

Un troisième aspect concerne un ensemble d'alimentation électrique comprenant au moins une unité de stockage selon le deuxième aspect. Selon un exemple, chaque unité de stockage de l'ensemble comprend un système de connexion.

Un quatrième aspect concerne un dispositif d'alimentation électrique comprenant au moins une unité de stockage selon le deuxième aspect, et/ou un ensemble d'alimentation selon le troisième aspect, un circuit d'alimentation et un support configuré pour recevoir l'au moins une unité de stockage et/ou l'ensemble d'alimentation. Le support peut comprendre une butée configurée pour former une surface d'appui de l'unité de stockage dans sa deuxième position.

Selon un exemple, le dispositif comprend un capteur apte à mesurer une température dans le dispositif d'alimentation, et de préférence une température de l'unité de stockage, et/ou apte à déterminer un état d'un actionneur, le système comprenant un actionneur configuré pour exercer une force s'exerçant sur le système de connexion de façon à induire un déplacement en translation de l'unité de stockage entre sa première et sa deuxième position lorsqu'une température d'un environnement de l'unité de stockage, et de préférence de l'unité de stockage.

Selon un exemple, le dispositif comprend un actionneur configuré pour exercer une force sur au moins l'un parmi le système de connexion et l'unité de stockage de façon à induire un déplacement en translation de l'unité de stockage entre sa première et sa deuxième position. L'actionneur peut être configuré ou piloté de façon à exercer cette force lorsqu'une température d'un environnement de l'unité de stockage, et de préférence de l'unité de stockage, dépasse une valeur seuil.

Un cinquième aspect concerne un appareil comprenant au moins un dispositif d'alimentation électrique selon le quatrième aspect, et/ou au moins un ensemble d'alimentation selon le troisième aspect, et/ou au moins une unité de stockage selon le deuxième aspect.

### BRÈVE DESCRIPTION DES FIGURES

Les buts, objets, ainsi que les caractéristiques et avantages de l'invention ressortiront mieux de la description détaillée d'exemples de réalisation de cette dernière, illustrés par les dessins d'accompagnement suivants dans lesquels :
Les figures 1A à 1C représentent les configurations du verrou magnétique, selon un exemple de réalisation.
Les figures 2A et 2B représentent des vues en coupe longitudinale et frontale d'une unité de stockage comprenant un système de connexion pour former un verrou magnétique, selon deux exemples de réalisation.
Les figures 3A et 3B représentent un ensemble d'alimentation comprenant deux unités de stockage raccordée par leur système de connexion formant un verrou magnétique selon deux exemples de réalisation, les unités de stockage étant connectées respectivement en parallèle et en série.
La figure 4 représente une vue en coupe longitudinale d'un ensemble d'alimentation comprenant deux unités de stockage, chaque unité de stockage comprenant un système de connexion pour former un verrou magnétique, selon un autre exemple de réalisation.
Les figures 5A à 5C représentent différents modes de réalisation du système de connexion illustré en figure 4.
Les figures 6A et 6B représentent des vues d'ensemble du système de connexion illustré en figure 4.
Les figures 7A à 8B représentent des vues d'une unité de stockage comprenant un système de connexion pour former un verrou magnétique et permettant un raccordement en série et/ou en parallèle, selon un exemple de réalisation.
Les figures 9 à 11B représentent un dispositif d'alimentation, selon un exemple de réalisation.
Les figures 12 et 13 représentent un ensemble d'alimentation comprenant plusieurs unités de stockage, les unités de stockage comprenant un système de connexion permettant une mise en continuité électrique, selon un exemple de réalisation.
Les figures 14A à 15B représentent schématiquement différents exemples de tracé des connecteurs pour la mise en continuité électrique illustrée par les figures 12 et 13.
Les figures 16A et 16B représentent un ensemble d'alimentation comprenant plusieurs unités de stockage raccordées en parallèle, les unités de stockage comprenant un système de connexion permettant une mise en continuité électrique, selon un exemple de réalisation.
Les figures 17A et 17B représentent un ensemble d'alimentation comprenant plusieurs unités de stockage raccordées en série, les unités de stockage comprenant un système de connexion permettant une mise en continuité électrique, selon un exemple de réalisation.
Les figures 18A à 18F représentent des vues d'une unité de stockage comprenant un système de connexion permettant une mise en continuité électrique et un raccordement en série et/ou en parallèle, selon un exemple de réalisation.
Les figures 19A à 19E représentent des éléments de fixation du système de connexion à une unité de stockage, selon plusieurs exemples de réalisation.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions relatives du système de connexion, de l'unité de stockage, de l'ensemble d'alimentation, du dispositif d'alimentation et de l'appareil ne sont pas représentatives de la réalité.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
- les connecteurs électriques sont configurés pour coopérer avec un connecteur du circuit d'alimentation ou un connecteur du système de connexion de l'au moins une unité de stockage adjacente. Les unités de stockage sont ainsi raccordées entre elles par leur système de connexion respectif. Contrairement aux solutions dans lesquelles chaque unité de stockage est connectée électriquement à un bus de puissance sans être reliée au préalable à une autre unité de stockage, le montage et la connexion des unités de stockage est simplifié,
- les connecteurs électriques s'étendent le long de la paroi entre des contacts électriques,
- les contacts électriques d'un connecteur sont aptes à coopérer avec un contact électrique d'un connecteur du circuit d'alimentation ou d'un connecteur du système de connexion de l'au moins une unité de stockage adjacente,
- la paroi forme un godet ou une gaine de l'unité de stockage. Ainsi, le système de connexion peut être assimilé à une gaine ou un godet fonctionnalisé pour permettre une continuité de service lors d'une déconnexion de l'unité de stockage que le godet ou la gaine contient,
- l'ensemble de connecteurs électriques comprend un premier jeu de connecteurs électriques et un deuxième jeu de connecteurs,
- les connecteurs électriques d'un même jeu de connecteurs d'un système de connexion ne sont pas raccordés électriquement entre eux,
- le premier jeu de connecteurs électriques comprend au moins deux contacts électriques disposés de sorte que les au moins deux contacts électriques raccordent électriquement l'unité de stockage, l'au moins une unité de stockage adjacente et le circuit d'alimentation lorsque l'unité de stockage est dans la première position,
- les connecteurs électriques du premier jeu, et plus particulièrement les au moins deux contacts électriques du premier jeu de connecteurs électriques, sont électriquement chacun raccordés à un pôle de l'unité de stockage,
- un premier connecteur électrique du premier jeu, et plus particulièrement au moins un premier contact électrique du premier jeu de connecteurs électriques, est électriquement raccordé au pôle positif de l'unité de stockage,
- un deuxième connecteur électrique du premier jeu, et plus particulièrement au moins un deuxième contact électrique du premier jeu de connecteurs électriques, est électriquement raccordé au pôle négatif de l'unité de stockage, le deuxième connecteur électrique étant distinct du premier connecteur et non raccordé électriquement à ce dernier,
- les connecteurs électriques du premier jeu, et plus particulièrement les au moins deux contacts électriques du premier jeu de connecteurs électriques, sont raccordés électriquement à un connecteur du circuit d'alimentation et/ou un contact électrique du système de connexion de l'au moins une unité de stockage adjacente, lorsque l'unité de stockage est dans la première position,
- les connecteurs électriques du premier jeu, et plus particulièrement les au moins deux contacts électriques du premier jeu de connecteurs électriques, ne sont pas raccordés électriquement à un connecteur du circuit d'alimentation et/ou un contact électrique du système de connexion de l'au moins une unité de stockage adjacente, lorsque l'unité de stockage est dans la deuxième position,
- le deuxième jeu de connecteurs électriques comprend au moins deux contacts électriques disposés de sorte que les au moins deux contacts électriques raccordent électriquement l'au moins une unité de stockage adjacente et le circuit d'alimentation sans raccorder électriquement l'unité de stockage lorsque l'unité de stockage est dans la deuxième position,
- les connecteurs électriques du deuxième jeu, et plus particulièrement les au moins deux contacts électriques du deuxième jeu de connecteurs électriques, ne sont pas électriquement raccordés à un pôle de l'unité de stockage,
- les connecteurs électriques du deuxième jeu, et plus particulièrement les au moins deux contacts électriques du deuxième jeu de connecteurs électriques, sont raccordés électriquement à un connecteur du circuit d'alimentation et/ou un contact électrique du système de connexion de l'au moins une unité de stockage adjacente, lorsque l'unité de stockage est dans la deuxième position,
- les connecteurs électriques du deuxième jeu, et plus particulièrement les au moins deux contacts électriques du deuxième jeu de connecteurs électriques, ne sont pas raccordés électriquement à un connecteur du circuit d'alimentation et/ou un contact électrique du système de connexion de l'au moins une unité de stockage adjacente, lorsque l'unité de stockage est dans la première position,
- chaque contact électrique du premier jeu de connecteurs est éloigné d'un contact électrique du deuxième jeu de connecteurs d'une distance sensiblement égale à une longueur de course d'un déplacement de l'unité de stockage entre sa première position et sa deuxième position, selon une direction sensiblement parallèle au déplacement de l'unité de stockage,
- l'ensemble de connecteurs électrique comprend :
   ∘ un premier jeu de connecteurs électriques configuré dans la première configuration pour raccorder électriquement, par au moins deux contacts électriques, l'unité de stockage, l'au moins une unité de stockage adjacente et le circuit d'alimentation,
   ∘ un deuxième jeu de connecteurs configuré dans la deuxième configuration pour raccorder électriquement, par au moins deux contacts électriques, l'au moins une unité de stockage adjacente et le circuit d'alimentation, sans raccorder l'unité de stockage,
   chaque contact électrique du premier jeu de connecteurs étant éloigné d'un contact électrique du deuxième jeu de connecteurs d'une distance sensiblement égale à une longueur de course d'un déplacement de l'unité de stockage entre sa première position et sa deuxième position, selon une direction sensiblement parallèle au déplacement de l'unité de stockage,
- le premier jeu de connecteurs électriques comprend un premier connecteur configuré pour raccorder électriquement en parallèle, le pôle positif de l'unité de stockage au pôle positif de l'au moins une unité de stockage adjacente et au circuit d'alimentation, et un deuxième connecteur configuré pour raccorder électriquement en parallèle, le pôle négatif de l'unité de stockage au pôle négatif de l'au moins une unité de stockage adjacente et au circuit d'alimentation, dans la première configuration,
- le deuxième jeu de connecteurs électriques comprend un premier connecteur configuré pour raccorder électriquement en parallèle, le pôle positif de l'au moins une unité de stockage adjacente au circuit d'alimentation, et un deuxième connecteur configuré pour raccorder électriquement en parallèle, le pôle négatif de l'au moins une unité de stockage adjacente au circuit d'alimentation, dans la deuxième configuration, le deuxième jeu ne raccordant pas électriquement au moins l'un, et de préférence les deux, parmi le pôle positif et le pôle négatif de l'unité de stockage,
- le premier jeu de connecteurs électriques comprend un premier connecteur configuré pour raccorder électriquement en série l'un parmi le pôle positif et le pôle négatif de l'unité de stockage à un pôle de polarité opposée de l'au moins une unité de stockage adjacente ou au circuit d'alimentation, et un deuxième connecteur configuré pour raccorder électriquement en série l'autre parmi le pôle positif et le pôle négatif de l'unité de stockage à un pôle de polarité opposée de l'au moins une unité de stockage adjacente ou au circuit d'alimentation, dans la première configuration, de préférence au moins l'un parmi le premier et le deuxième connecteur étant connecté à l'au moins une unité de stockage adjacente,
- le deuxième jeu de connecteurs électriques comprend un connecteur configuré pour raccorder électriquement en série un pôle de l'au moins une unité de stockage adjacente au circuit d'alimentation, dans la deuxième configuration, le deuxième jeu ne raccordant pas électriquement au moins l'un, et de préférence les deux, parmi le pôle positif et le pôle négatif de l'unité de stockage,
- le premier jeu de connecteurs électriques comprend un premier connecteur configuré pour raccorder électriquement en série, l'un parmi le pôle positif et le pôle négatif de l'unité de stockage à un pôle de polarité opposée de l'au moins une unité de stockage adjacente ou au circuit d'alimentation, et un deuxième connecteur configuré pour raccorder électriquement en série l'autre parmi le pôle positif et le pôle négatif de l'unité de stockage à un pôle de polarité opposée de l'au moins une unité de stockage adjacente ou au circuit d'alimentation, dans la première configuration, de préférence au moins l'un parmi le premier et le deuxième connecteur étant connecté à l'au moins une unité de stockage adjacente,
- le deuxième jeu de connecteurs électriques comprend un connecteur reliant le deuxième connecteur du premier jeu de connecteurs électriques et configuré, dans la deuxième configuration pour raccorder électriquement en série un pôle de l'au moins une unité de stockage adjacente ou le circuit d'alimentation, au deuxième jeu de connecteurs électriques d'un système de connexion d'une unité de stockage adjacente distincte, dans sa première position, le deuxième jeu ne raccordant pas électriquement au moins l'un, et de préférence les deux, parmi le pôle positif et le pôle négatif de l'unité de stockage,
- le premier jeu de connecteurs comprend :
   ∘ une première paire de connecteurs électriques disposée selon un premier plan et configurée pour raccorder électriquement en parallèle l'unité de stockage, l'au moins une unité de stockage adjacente et le circuit d'alimentation, dans la première configuration,
   ∘ une deuxième paire de connecteurs électriques disposée selon un deuxième plan et configurée pour raccorder électriquement en série l'unité de stockage l'au moins une unité de stockage adjacente et le circuit d'alimentation, dans la première configuration, le premier plan et le deuxième étant distincts, de préférence perpendiculaires, et
- le deuxième jeu de connecteurs ne raccorde pas électriquement au moins l'un, et de préférence les deux, parmi le pôle positif et le pôle négatif de l'unité de stockage, et comprend
   ∘ au moins un connecteur électrique configuré, dans la deuxième configuration, pour raccorder électriquement en parallèle l'au moins une unité de stockage adjacente au circuit d'alimentation par au moins deux contacts électriques, les au moins deux contacts électriques étant disposés dans le premier plan,
   ∘ au moins un connecteur électrique configuré, dans la deuxième configuration, pour raccorder électriquement en série l'au moins une unité de stockage adjacente au circuit d'alimentation par au moins deux contacts électriques, les au moins deux contacts électriques étant disposés dans le deuxième plan. Le système de connexion est ainsi rendu plus modulaire en permettant à la fois un raccordement en série ou en parallèle de l'unité de stockage.
- le système comprend en outre un premier module configuré pour coopérer avec un deuxième module de façon à immobiliser l'unité de stockage au moins dans sa première position. De préférence le premier module et le deuxième module forment un verrou bistable de façon à immobiliser l'unité de stockage dans sa première position et dans sa deuxième position. Ainsi, le placement de l'unité de stockage dans l'une et/ou l'autre de ses positions est rendu plus précis, améliorant la mise en continuité électrique dans les première et/ou deuxième configurations. En outre, le verrou bistable peut être configuré pour maintenir en contact le premier et le deuxième module ensemble. Le maintien en contact permet d'améliorer le contact électrique et donc d'améliorer encore la mise en continuité électrique dans les première et/ou deuxième configurations,
- le système comprend au moins un premier module de connexion magnétique apte à être solidarisé à l'unité de stockage, et configuré pour coopérer avec un deuxième module de connexion magnétique et former un verrou magnétique présentant une première configuration dans laquelle le premier module et le deuxième module sont attirés magnétiquement l'un à l'autre, de façon à immobiliser l'unité de stockage dans la première position, et le verrou magnétique présente une deuxième configuration dans laquelle le premier module et le deuxième module sont attirés magnétiquement l'un à l'autre, de façon à immobiliser l'unité de stockage dans la deuxième position, différente de la première position,
- le passage de l'une parmi la première configuration et la deuxième configuration, à l'autre parmi la première configuration et la deuxième configuration, est induit par l'exercice d'une force s'exerçant sur au moins l'un parmi la paroi du système de connexion et l'unité de stockage, de façon à induire un déplacement en translation de l'unité de stockage entre sa première et sa deuxième position,
- le système comprend un actionneur configuré pour exercer ladite force lorsqu'une température d'un environnement de l'unité de stockage, et de préférence de l'unité de stockage, dépasse une température seuil prédéterminée. La déconnexion de l'unité peut ainsi être effectuée dès qu'un échauffement de l'unité de stockage survient, sans action additionnelle d'un opérateur. Le risque de propagation d'un défaut de fonctionnement est ainsi limité,
- le système comprend un actionneur thermosensible configuré pour exercer ladite force lorsque sa température dépasse une température seuil prédéterminée,
- le système comprend un actionneur présentant une configuration déployée et une configuration rétractée, l'actionneur étant configuré de sorte que le passage de l'une à l'autre de ces configurations induise l'exercice de ladite force.

Dans la suite de la description, le terme « sur » ne signifie pas nécessairement « directement sur ». Ainsi, lorsque l'on indique qu'une pièce ou qu'un organe A est en appui « sur » une pièce ou un organe B, cela ne signifie pas que les pièces ou organes A et B soient nécessairement en contact direct avec l'autre. Ces pièces ou organes A et B peuvent être soit en contact direct soit être en appui l'une sur l'autre par l'intermédiaire d'une ou plusieurs autres pièces. Il en est de même pour d'autres expressions telle que par exemple l'expression « A agit sur B » qui peut signifier « A agit directement sur B » ou « A agit sur B par l'intermédiaire d'une ou plusieurs autres pièces». L'expression « A est raccordée électriquement avec B »ou « A est mis en continuité électrique avec B » signifie que A et B sont reliés électriquement, A pouvant être directement raccordée sur B ou bien indirectement par le biais d'un autre élément, par exemple via un fusible ou un interrupteur.

Le terme mobile correspond à un mouvement de rotation ou à un mouvement de translation ou encore à une combinaison de mouvements, par exemple la combinaison d'une rotation et d'une translation.

Le terme « solidaire » utilisé pour qualifier la liaison entre deux pièces signifie que les deux pièces sont liées/fixées l'une par rapport à l'autre, selon au moins un degré de liberté. Par exemple, s'il est indiqué que deux pièces sont solidaires en translation selon une direction Y, cela signifie que les pièces peuvent être mobiles l'une par rapport à l'autre, possiblement selon plusieurs degrés de liberté, à l'exclusion de la liberté en translation selon la direction Y. Autrement dit, si on déplace une pièce selon la direction Y, l'autre pièce effectue le même déplacement.

On entend par un actionneur ou un élément « thermosensible », un actionneur ou un élément dont les propriétés peuvent être modifiées sensiblement autour d'une température seuil. Plus particulièrement, la forme de l'actionneur ou de l'élément peut être modifiée autour de la température seuil.

On entend par un élément « à base » d'un matériau A, un élément comprenant ce matériau A uniquement ou ce matériau A et éventuellement d'autres matériaux.

On entend par un paramètre « sensiblement égal/supérieur/inférieur à » une valeur donnée, que ce paramètre est égal/supérieur/inférieur à la valeur donnée, à plus ou moins 10 % près, voire à plus ou moins 5 % près, de cette valeur.

Dans la suite, l'épaisseur d'un élément ainsi que les profondeurs sont généralement mesurées selon une direction perpendiculaire au plan d'extension principale de l'élément, par exemple de façon perpendiculaire à sa surface.

Dans la description détaillée qui suit, il pourra être fait usage de termes tels que « longitudinal », « transversal », « avant », « arrière », « intérieur », « extérieur ». Ces termes doivent être interprétés de façon relative en relation avec la position relative des composants du dispositif d'alimentation. La direction « longitudinale » peut notamment correspondre à la direction d'extension principale de l'unité de stockage.

«Interne » désigne les éléments ou les faces tournées vers l'intérieur d'un système, d'une unité, d'un ensemble d'alimentation ou d'un dispositif, et «externe » désigne les éléments ou les faces tournées vers l'extérieur d'un système, d'une unité, d'un ensemble d'alimentation ou d'un dispositif. Selon un exemple, l'unité de stockage présentant un axe central A, « interne » désigne les éléments ou les faces tournées vers cet axe, et «externe » désigne les éléments ou les faces tournées à l'opposé de cet axe central.

On utilisera également un repère dont la direction longitudinale ou bas/haut correspond à l'axe z, la direction transversale correspond à l'axe y, et la direction frontale ou avant/arrière correspond à l'axe x.

Comme énoncé précédemment, les unités de stockage 2 d'énergie électrique forment des briques élémentaires de stockage électrique. Ces unités peuvent être connectées en parallèle et ou en série pour constituer un ensemble d'alimentation 3, communément appelé module de batterie, et/ou un pack-batterie, de tension et/ou de capacité plus importante. Les unités de stockage 2 peuvent être comprises dans un dispositif d'alimentation 4, destiné à alimenter un appareil 5. L'appareil 5 peut être issu de tout domaine d'application, tel que des appareils mobiles ou stationnaires, des appareils pour des applications de transport, par exemple comprenant un moteur. Plus particulièrement, l'appareil 5 peut être configuré pour être alimenté électriquement par une batterie lithium-ion.

Les unités de stockage 2 sont généralement raccordées électriquement entre elles et/ou au dispositif d'alimentation 4 d'un appareil 5 grâce à un bus de puissance 400. Un bus de puissance consiste généralement en un jeu de barres ou en des pistes conductrices sur un circuit imprimé, par exemple en cuivre. Le bus de puissance 400 assure notamment la liaison électrique entre les unités de stockage dans le dispositif d'alimentation 4. Les pôles 20, 21 des unités de stockage 2 sont habituellement vissées ou soudées une à une sur le bus de puissance 400, induisant un montage long et une architecture complexe.

Un dispositif d'alimentation 4 comprenant généralement une pluralité d'unité de stockage 2 raccordées électriquement entre elles, en série ou en parallèle, la déconnexion électrique d'une unité de stockage entraine une perte de la continuité électrique entre l'unité de stockage 2 déconnectée et les autres unités, induisant un arrêt de l'alimentation par ces unités de stockage.

Afin d'assurer une continuité de service du dispositif d'alimentation 4, malgré la perte de la continuité électrique entre l'unité de stockage 2 déconnectée et les autres unités, le premier aspect de l'invention concerne un système de connexion 1 d'au moins une unité de stockage 2. Dans la suite, on se réfère à l'exemple non-limitatif où le système de connexion 1 coopère avec une seule unité de stockage 2. Notons qu'on peut prévoir que le système de connexion 1 soit adapté pour plusieurs, par exemple deux unités de stockage 2, voire pour un ensemble d'alimentation 3.

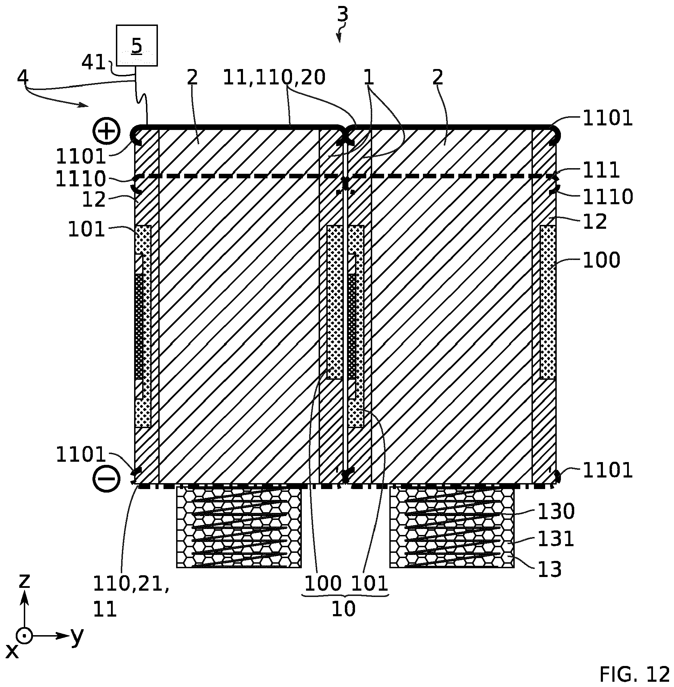

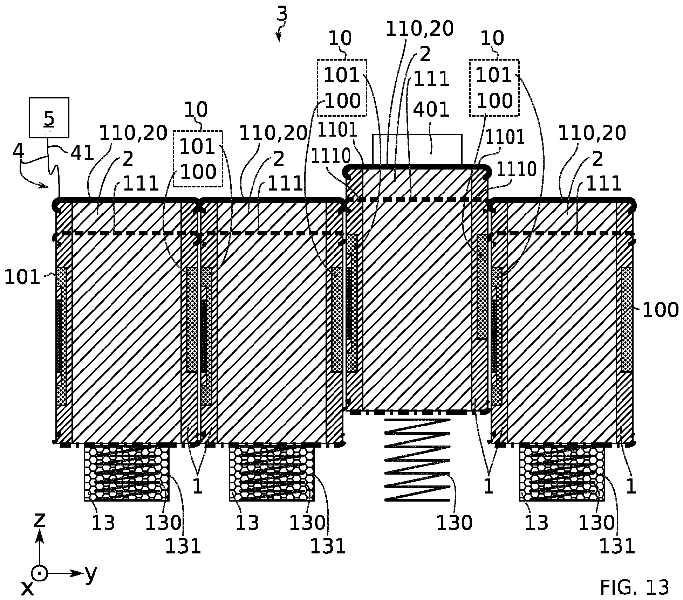

Le système de connexion 1 comprend un ensemble de connecteurs électriques 11, tout d'abord décrits en référence aux figures 12 et 13. Ces connecteurs électriques 11 présentent une première configuration dans laquelle ils forment un circuit électrique mettant en continuité électrique l'unité de stockage 2, au moins une unité de stockage 2 adjacente et le circuit d'alimentation 41, comme l'illustre par exemple la figure 12. Dans cette première configuration, l'unité de stockage 2 et l'unité de stockage adjacente sont dans une première position. Chaque unité de stockage est ainsi raccordée électriquement au circuit d'alimentation 41 et participe à l'alimentation électrique.

Ces connecteurs électriques 11 présentent une deuxième configuration dans laquelle ils forment un circuit électrique mettant en continuité électrique l'unité de stockage 2 adjacente et le circuit d'alimentation 41, et dans laquelle l'unité de stockage 2 n'est pas raccordée électriquement au circuit d'alimentation 41, comme illustré par exemple par la figure 13..Dans la deuxième configuration, les connecteurs 11 électrique sont configurés de sorte que l'unité de stockage 2 n'est pas raccordée électriquement au moins par le biais d'un de ses pôles. En effet, il suffit qu'un des pôles de l'unité de stockage 2 soit déconnecté électriquement du circuit d'alimentation 41 pour que l'unité de stockage 2 soit déconnectée électriquement. Lors d'un défaut de fonctionnement de l'unité de stockage, l'unité de stockage 2 peut être déplacée de sa première à sa deuxième position et être déconnectée. L'unité de stockage 2 adjacente, dans sa première position, est toujours raccordée au circuit d'alimentation 41 grâce à la continuité électrique mise en place par les connecteurs 11 dans la deuxième configuration. L'unité de stockage 2 adjacente continue donc de participer à participe à l'alimentation électrique.

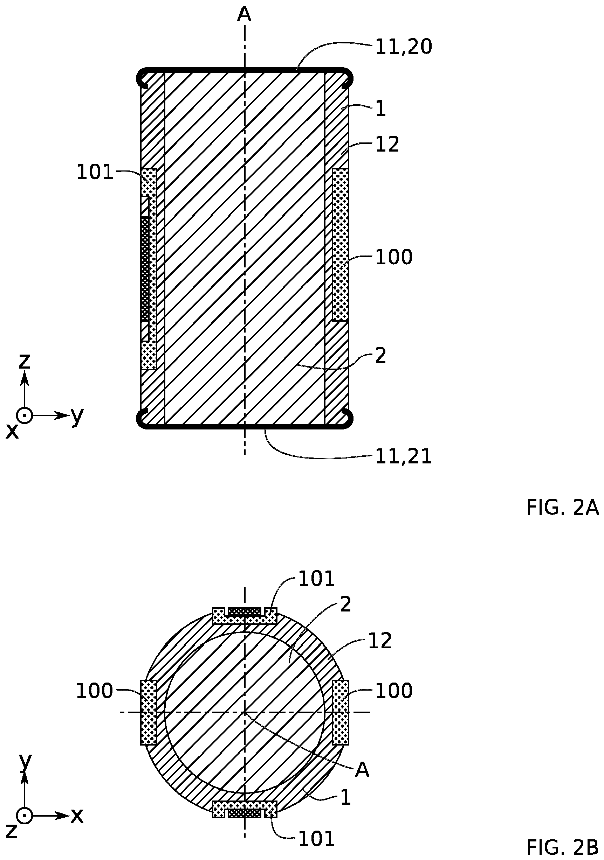

Le raccordement électrique par les connecteurs 11 peut par exemple être via des systèmes de connexion 1 d'autres unités de stockage 2, et/ou via un circuit d'alimentation 41 du dispositif d'alimentation 4. Par exemple, selon l'exemple où l'unité de stockage présente un pôle positif 20 à une première extrémité, et un pôle négatif à une deuxième extrémité 21, un connecteur 11 dans la première configuration peut être en contact avec un pôle 20, 21 et s'étendre sensiblement perpendiculairement à l'axe A reliant les deux pôles de l'unité de stockage 2, comme illustré par la figure 2A, pour être raccordé à un connecteur 11 d'un autre système de connexion où au support 40. Les connecteurs 11 peuvent comprendre un contact électrique au niveau de laquelle le contact électrique est réalisé avec l'élément électrique à raccorder.

Le système de connexion 1 peut en outre comprendre une paroi 12 configurée pour former un pourtour au moins partiel de l'unité de stockage 2. La paroi 12 peut entourer latéralement l'unité de stockage 2 selon les directions x et y, comme illustré en figure 2A. La paroi 12 peut plus particulièrement former un godet ou une gaine de l'unité de stockage 2. Un godet désigne une enveloppe contenant, de préférence directement, le ou les matériaux réactifs d'une unité de stockage 2. Un godet peut être soumis à un potentiel électrique de l'unité de stockage, par exemple le godet est à base ou fait d'un matériau métallique. Une gaine est une enveloppe configurée de façon à entourer l'au moins une unité de stockage 2, généralement de façon additionnelle au godet, pour protéger l'unité de stockage 2 d'éventuels chocs extérieurs. Selon un exemple, une gaine peut entourer plusieurs unités de stockage 2. La gaine peut en outre être configurée pour isoler électriquement l'unité de stockage 2, et plus particulièrement le godet, de son environnement.

La paroi 12 reçoit les connecteurs 11 et peut recevoir un ou des modules 100, 101 de connexion magnétiques, décrits ultérieurement. La paroi est configurée pour être solidarisée de l'unité de stockage 2. Les connecteurs 11 étant montés sur la paroi 12, ils sont aptes à être solidarisés de l'unité de stockage 2. Ainsi, le système de connexion 1 peut constituer une gaine ou un godet fonctionnalisé pour la mise en continuité électrique. Le système de connexion permet en outre de simplifier l'assemblage et le raccordement d'une ou de plusieurs unités de stockage 2, en minimisant le recours à un bus de puissance externe et/ou des moyens d'assemblage additionnels, comme il sera décrit ultérieurement.

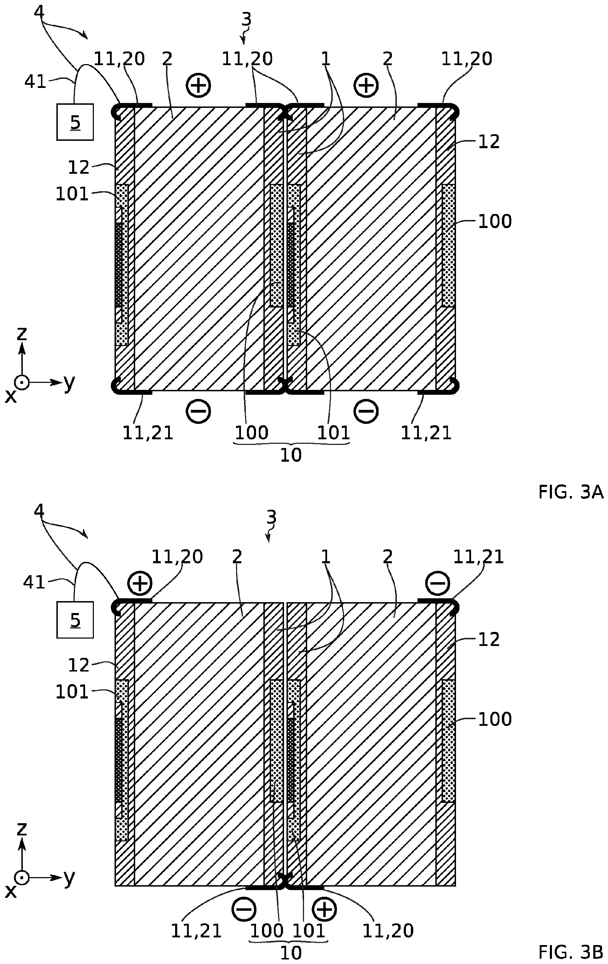

Le système de connexion 1 peut être configuré de façon à autoriser un raccordement en parallèle et/ou en série d'une unité de stockage 2, dans sa première configuration. Comme illustré en figure 3A pour un montage en parallèle, l'agencement des connecteurs 11 peut être configuré pour raccorder ensemble d'une part les pôles positifs 20, et d'autre part les pôles négatifs 21, des unités de stockage 2, dans la première configuration du verrou magnétique 10. Comme illustré en figure 3B pour un montage en série, l'agencement des connecteurs 11 peut être configuré pour raccorder, dans la première configuration du verrou magnétique 10, successivement un pôle positif 21 d'une unité de stockage 2 puis un pôle négatif 21 d'une unité de stockage 2 adjacente. Pour cela, l'orientation des unités de stockage 2 peut être alternée, soit avec son système de connexion 1, soit à l'intérieur de son système de connexion 1, pour un branchement en série, de sorte qu'un pôle positif 21 d'une unité de stockage 2 se retrouve en regard d'un pôle négatif 21 d'une unité de stockage 2 adjacente.

Selon un exemple, un système de connexion 1 peut être configuré de façon spécifique à un raccordement en série ou en parallèle d'unités de stockage 2, dans la première configuration. Selon un exemple alternatif, le système de connexion 1 peut comprendre deux paires de connecteurs électriques 11, la première paire 110 étant configurée pour l'un parmi un raccordement parallèle et un raccordement série, et la deuxième paire 110' pour l'autre parmi un raccordement parallèle et un raccordement série. Un système de connexion 1 unique pour ces deux types de raccordement permet une grande modularité de connexion et d'assemblage des unités de stockage 2.

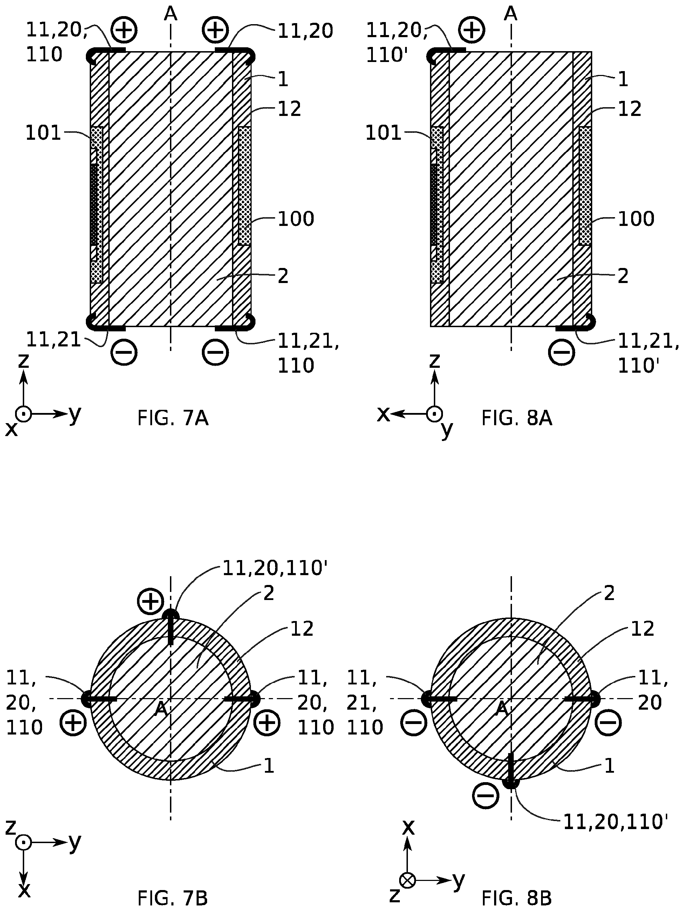

Cet exemple peut être illustré par les figures 7A à 8B. La première paire de connecteurs 110 peut être disposée selon un premier plan et la deuxième paire de connecteurs 110' peut être disposée selon un deuxième plan distinct, le premier et le deuxième plan incluant de préférence la direction du déplacement de l'unité de stockage 2 de sa première à sa deuxième position. Chacun de ses plans peuvent inclure l'axe central A. De préférence, ces deux plans sont perpendiculaires.

Pour former sa deuxième configuration, comme illustré par la figure 12, le système de connexion 1 comprend en outre au moins un connecteur électrique distinct 111, de préférence un deuxième jeu 111 de connecteurs 11, configuré pour conserver la continuité électrique entre une unité de stockage 2 adjacente à l'unité défectueuse et le circuit d'alimentation 41. Cette continuité peut être réalisée par exemple en reliant deux unités de stockage 2 disposées de part et d'autre de l'unité 2 défectueuse, comme illustré par la figure 13.

Plusieurs unités de stockage 2 comprenant le système de connexion 1 peuvent être assemblées ensemble dans leur première position. Le premier jeu 110 de connecteurs 11 raccorde alors électriquement entre elles les unités de stockage 2. Le passage de la première à la deuxième position de l'unité de stockage 2 peut être effectué par une rotation, une combinaison de translation et de rotation, et de préférence par une translation. Le passage de l'une à l'autre des première et deuxième positions de l'unité de stockage 2, et donc le passage d'une à l'autre des configurations de connecteurs 11, peut être induit par l'exercice d'une force sur le système de connexion 1, par exemple sur sa paroi. Le passage peut être actionné par un opérateur, ou de préférence par un actionneur 13. L'actionneur 13 peut être piloté ou actionnable passivement. L'actionneur peut par exemple passer d'une configuration rétractée à une position déployée et ainsi entrainer le changement de position de l'unité de stockage 2.

Selon un exemple, l'actionneur 13 peut être actionné suite à une élévation de la température dans le dispositif d'alimentation 4, et plus particulièrement une élévation de la température d'une unité de stockage 2. Lors d'un défaut de fonctionnement d'une unité de stockage 2, l'unité de stockage 2 peut surchauffer. Classiquement, lorsque qu'une unité de stockage 2 est solidaire et raccordée électriquement à un support 40 d'un dispositif d'alimentation 4, ce défaut peut se propager dans le dispositif 4, voire au reste de l'appareil 5. Lors du défaut de fonctionnement, la température de l'unité de stockage 2 peut s'élever au-dessus d'une température seuil. L'actionneur 13 peut alors être actionné pour basculer le système de connexion 1 de la première configuration à la deuxième configuration des connecteurs 11. Ainsi, l'unité de stockage 2 peut être déplacée dans sa deuxième position. Ce déplacement peut en outre permettre de l'éloigner d'une paroi du support 40 dans lequel elle est placée, et ainsi minimiser sa connexion thermique avec le support 40.

Lors du déplacement de l'unité de stockage 2, les connecteurs 111, 110 étant aptes à être solidarisés avec l'unité de stockage 2, le ou les connecteurs 111 sont déplacés avec l'unité de stockage 2 défectueuse et sont alors positionnés de façon à raccorder l'unité de stockage 2 adjacente, sans connecter l'unité 2 défectueuse, comme illustré par la figure 13.

Pour cela, le premier jeu 110 de connecteurs électriques 11 peut être configuré dans la première configuration pour raccorder électriquement, par au moins deux contacts électriques 1101, l'unité de stockage 2 avec l'unité de stockage adjacente et le circuit d'alimentation 41 comme illustré par la figure 12. Le deuxième jeu 111 de connecteurs 11 peut être configuré dans la deuxième configuration pour raccorder électriquement, par au moins deux contacts électriques 1100, l'unité de stockage 2 adjacente et le circuit d'alimentation 41, sans raccorder l'unité de stockage 2. Pour cela, comme l'illustre le passage de la figure 12 à la figure 13, chaque contact électrique1101 du premier jeu 110 de connecteurs 11 peut être éloigné d'un contact électrique 1110 correspondante du deuxième jeu 111 de connecteurs 11 d'une distance sensiblement égale à une longueur de course du déplacement de l'unité de stockage 2 entre sa première position et sa deuxième position, dans la direction de ce déplacement.

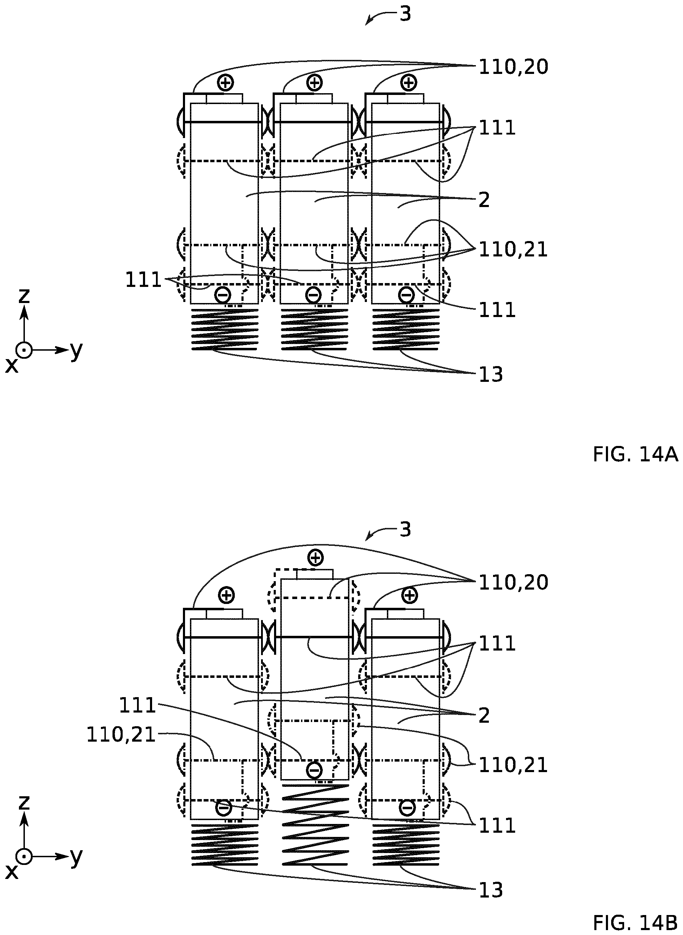

Plusieurs exemples du système de connexion 1 peuvent être réalisés pour répondre à la problématique de continuité de service en cas de défaillance d'une unité de stockage 2. Ces exemples sont maintenant détaillés en références aux figures 14A à 18D.

Comme illustré par les figures 14A et 14B, les unités de stockage 2 peuvent être reliées en elles en parallèle par leur système de connexion 1. Notamment, les pôles positifs 20 peuvent être reliés entre eux par des connecteurs 110. Les pôles négatifs 21 peuvent être reliés entre eux par des connecteurs 110. Le système peut comprendre un deuxième jeu 111 de connecteurs, par exemple reliés entre eux, et non reliés au reste du dispositif d'alimentation 4, lorsque les unités de stockage 2 sont dans leur première position. Leur potentiel peut donc être nul. Le deuxième jeu 111 de connecteurs peut comprendre un premier connecteur 111 destiné à raccorder les connecteurs 110 des pôles positifs 20 des unités adjacentes, et un deuxième connecteur 111 destiné à raccorder les connecteurs 110 des pôles négatifs 21 des unités adjacentes, suite au déplacement de l'unité défectueuse à sa deuxième position.

Les connecteurs 111 peuvent s'étendre selon une direction sensiblement parallèle aux connecteurs 110. Le deuxième jeu 111 de connecteurs est de préférence espacé du premier jeu 110 de connecteurs d'une distance sensiblement égale à la longueur de course de l'unité de stockage 2 entre sa première et sa deuxième position. Lors du déplacement de l'unité de stockage défectueuse à sa deuxième position, ses pôles positif 20 et négatif 21 sont électriquement déconnectés des unités adjacentes. Le deuxième jeu de connecteur 111 est alors en continuité électrique avec les unités adjacentes.

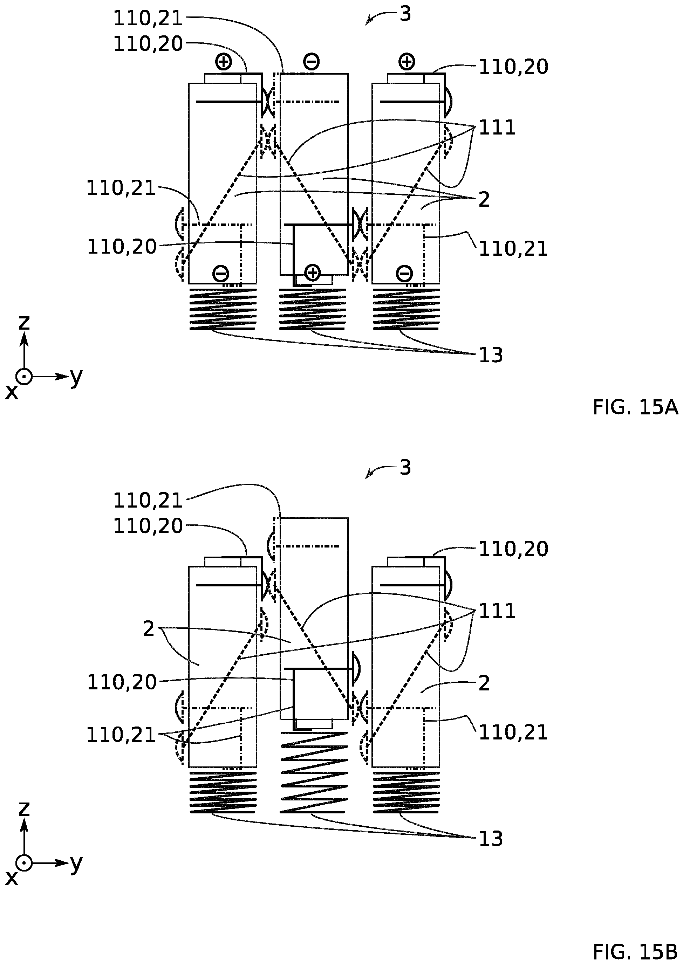

Comme illustré par les figures 15A et 15B, les unités de stockage 2 peuvent être reliées en série entre elles par leur système de connexion 1. Notamment, chaque pôle positif 20 d'une unité de stockage 2 peut être connecté au pôle négatif 21 de l'unité adjacente par le premier jeu 110 de connecteurs. Le système peut comprendre un deuxième jeu 111 de connecteurs, par exemple reliés entre eux, et non reliés au reste du dispositif d'alimentation 4, lorsque les unités de stockage 2 sont dans leur première position. Le deuxième jeu 111 de connecteurs peut comprendre un connecteur 111 destiné à raccorder le pôle positif 20 d'une première unité de stockage adjacente au pôle négatif d'une deuxième unité de stockage adjacente, suite au déplacement de l'unité défectueuse à sa deuxième position.

De même, le connecteur 111 est de préférence espacé du premier jeu 110 de connecteurs d'une distance sensiblement égale à la longueur de course de l'unité de stockage 2 entre sa première et sa deuxième position. Lors du déplacement de l'unité de stockage défectueuse, ses pôles positif 20 et négatif 21 sont électriquement déconnectés des unités adjacentes. Le connecteur 111 est alors en continuité électrique avec les unités adjacentes.

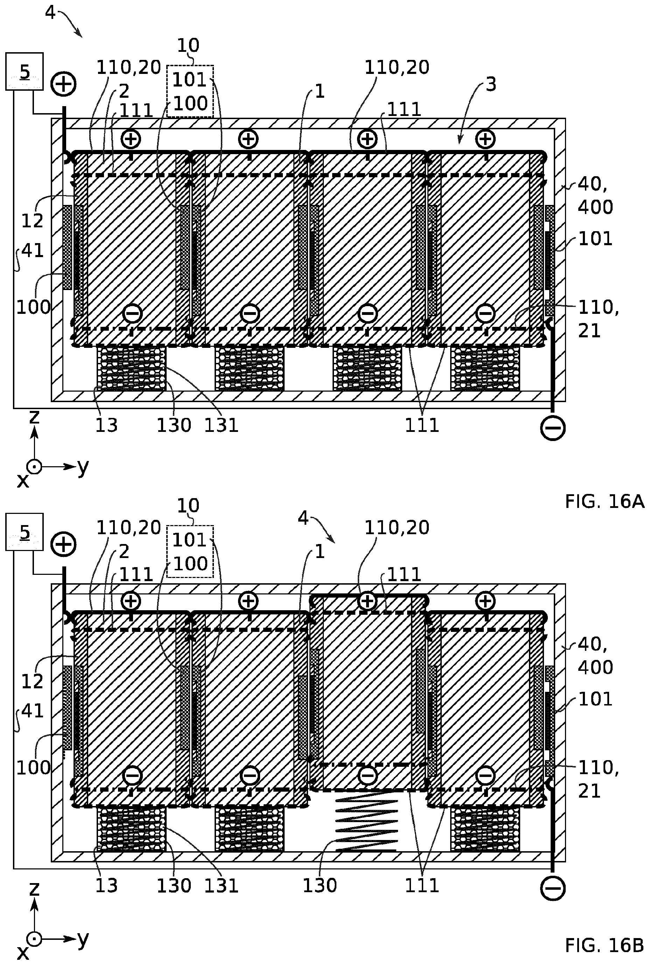

Notons que le ou les connecteurs 111 peuvent être configurés pour raccorder entre elles des unités de stockage adjacentes à l'unité défectueuse, ou pour raccorder une unité de stockage adjacente à l'unité défectueuse au circuit d'alimentation 41 d'un dispositif d'alimentation 4, comme illustré par les figures 16A à 17B.

La coopération du système de connexion 1 avec un support 40 du dispositif d'alimentation 4 est maintenant décrite en référence aux figures 16A à 17B. Pour permettre une connexion en parallèle, les unités de stockage 2 peuvent être assemblées et/ou raccordée électriquement latéralement par leur système de connexion 1. Toutes les unités de stockage 2 peuvent être orientées dans le même sens, relativement à leur polarité, par exemple avec la polarité positive sur le dessus, comme illustré par la figure 16A. La figure 16B montre un exemple dans lequel la troisième unité de stockage est défaillante. L'actionneur 13 peut être actionné, par exemple à cause de réchauffement excessif de l'unité, et induire le déplacement de l'unité dans sa deuxième position.

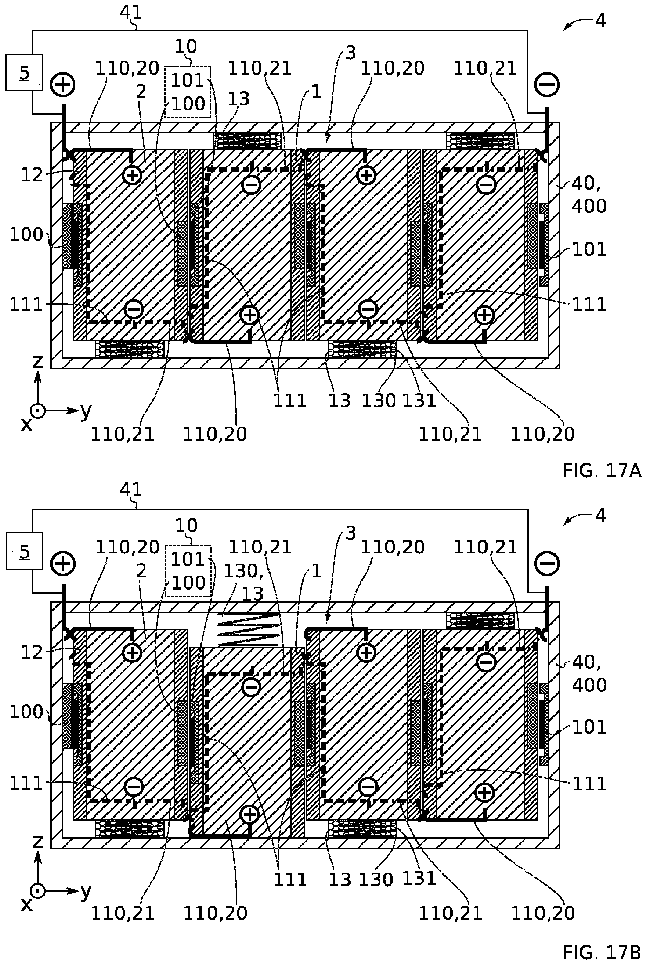

Pour permettre une connexion en série, un premier exemple est décrit. Les unités de stockage 2 peuvent être assemblées et/ou raccordée électriquement latéralement par leur système de connexion 1. Entre les différentes unités de stockage 2, l'orientation relative entre le système de connexion 1 et l'unité de stockage peut être identique. De façon équivalente, les différentes unités de stockage 2 peuvent être disposées de la même façon dans leur système de connexion 1 respectif. L'orientation des unités de stockage 2 entre elles peut être alternée relativement à leur polarité, par exemple avec la polarité positive sur le dessus pour une première unité de stockage 2, puis sur le dessous pour l'unité de stockage 2 adjacente, comme illustré par la figure 17A. Selon cet exemple, le deuxième connecteur 111 d'un système de connexion 1 s'étend depuis la paroi 12 du système de connexion 1 jusqu'au connecteur 110 du pôle négatif 21 de l'unité de stockage 2 comprenant le même système de connexion 1.

La figure 17B montre un exemple dans lequel la deuxième unité de stockage 2 est défaillante. L'actionneur 13 peut être actionné et induire le déplacement de l'unité 2 dans sa deuxième position. Selon cet exemple, le déplacement induit également une déconnexion d'une unité de stockage 2 adjacente, une continuité électrique étant formée entre le connecteur 111 et le connecteur 110 du pôle négatif 21 du système de connexion 1, et le connecteur 111 du système de connexion 1 adjacente. Dans cette configuration, les actionneurs 13 des unités de stockage 2 sont de préférence disposés successivement de part et d'autre de l'ensemble formé par les unités de stockage et leur système de connexion 1.

Pour un deuxième exemple de connexion en série, pouvant être représenté par les figures 15A et 15B, seule l'unité de stockage 2 défaillante peut être déconnectée. Pour cela, entre les différentes unités de stockage 2, l'orientation relative entre le système de connexion 1 et l'unité de stockage peut être alternée relativement à sa polarité. De façon équivalente, les différentes unités de stockage 2 peuvent être disposées dans leur système de connexion 1 respectif de façon successivement inversée relativement à leur polarité. Selon cet exemple, l'orientation des unités de stockage 2 entre elles est en outre alternée relativement à leur polarité, avec la polarité positive sur le dessus pour une première unité de stockage 2, puis sur le dessous pour l'unité de stockage 2 adjacente, comme illustré par la figure 15A. Le système de connexion reste de préférence structurellement le même entre les unités de stockage 2. Dans cette configuration, les actionneurs 13 des unités de stockage 2 sont de préférence disposés d'un même côté de l'ensemble formé par les unités de stockage et leur système de connexion 1.

Selon un exemple, le système de connexion 1 peut être configuré de façon spécifique à une mise en continuité pour un raccordement en série ou en parallèle d'unités de stockage 2. Selon un exemple alternatif, le système de connexion 1 peut comprendre les jeux de connecteurs 110, 111 permettant à la fois un raccordement et une mise en continuité en série et en parallèle. Ainsi, un système de connexion unique 1 permet une encore plus grande modularité de connexion et d'assemblage des unités de stockage 2.

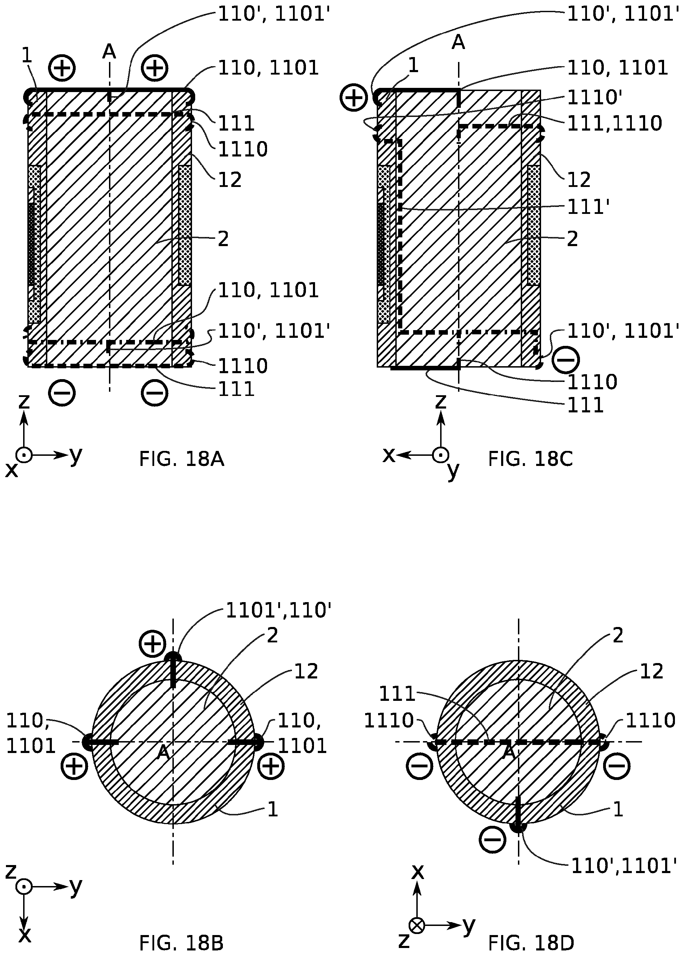

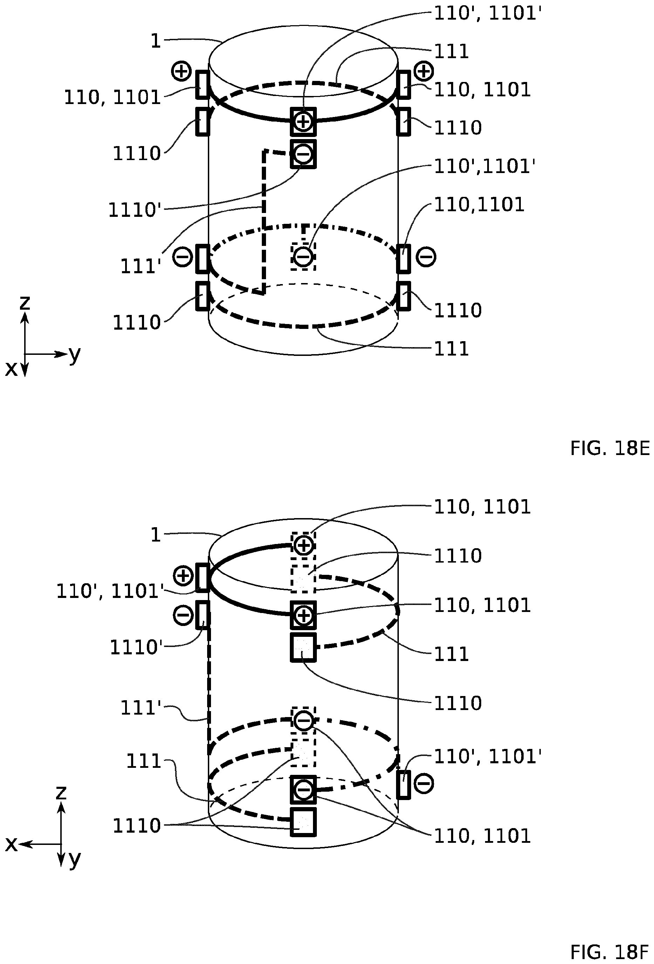

Cette configuration peut être illustrée par les figures 18A à 18F. Selon cet exemple, une première paire de connecteurs 110 et une première paire de connecteur 111 peuvent être au moins en partie disposées selon un premier plan pour permettre le raccordement et la mise en continuité d'unité de stockage 2 en parallèle, comme illustré par la figure 18A, 18E et 18 F. Une deuxième paire de connecteurs 110' et au moins un deuxième ou deuxième paire de connecteurs 111' peuvent être au moins en partie disposées dans un deuxième plan, comme illustré par la figure 18C, 18E et 18 F, pour permettre le raccordement et la mise en continuité d'unité de stockage 2 en série. Plus particulièrement, les contacts électriques 1110 et 1101 peuvent être disposés dans le premier plan, et les contacts électriques 1101' et 1110' peuvent être disposés dans le deuxième plan, comme illustré par les figures 18A et 18C. Le premier plan est alors distinct du deuxième, ces deux plans incluant de préférence la direction du déplacement relatif de l'unité de stockage 2 de sa première à sa deuxième position. Chacun de ces plans pouvant inclure l'axe central A. De préférence, ces deux plans sont perpendiculaires, comme l'illustre la vue du dessus du système de connexion 1 en figure 18B, et la vue du dessous du système de connexion 1 en figure 18D.

Le dispositif d'alimentation 4 peut en outre comprendre un capteur 42 apte à mesurer la température et/ou l'état de l'actionneur 13, selon par exemple qu'il soit rétracté ou déployé. Lorsque la température dépasse la valeur seuil et/ou suite à l'actionnement de l'actionneur 13, la mesure peut être transmise à un système de gestion de batterie pour signaler le défaut.

Selon un exemple, l'actionneur 13 peut être actionné par un système de gestion de batterie, communément désigné en anglais par le terme « *Battery Management System ».* Selon un autre exemple, l'actionneur 13 peut être thermosensible et être actionné passivement par l'élévation de température. On peut prévoir que l'actionneur 13 comprenne un organe élastique présentant un corps thermosensible, rétracté en dessous de la température seuil, et déployé en dessus de la température seuil. Pour cela, l'organe élastique peut être fait d'un matériau présentant une transition de phase solide sensiblement à la température seuil. L'élément thermosensible peut plus particulièrement être un ressort à base d'un alliage à mémoire de forme.

Selon un exemple alternatif, l'actionneur 13 peut comprendre un organe élastique 130, tel qu'un ressort, retenu dans une configuration rétractée par un matériau fusible 131. L'organe élastique 130 et/ou le matériau fusible 131 peut être placé directement en contact avec l'unité de stockage 2 pour favoriser le contact thermique. Lorsque l'unité de stockage 2 s'échauffe anormalement, le matériau fusible fond et induit une libération de l'organe élastique 130 venant exercer une force sur le système de connexion 1, comme l'illustre par exemple le passage de la figure 12 à la figure 13.

Afin de garantir un bon raccordement électrique des connecteurs 11 dans leur première et deuxième configuration, de préférence le système de connexion 1 est configuré de façon à contrôler avec précision le placement de l'unité de stockage 2 dans l'une ou l'autre ses positions. Pour cela, le support 40 peut comprendre une butée configurée pour former une surface d'appui de l'unité de stockage 2 dans sa deuxième position. Selon un exemple, le support 40 forme un cadre forme un cadre contenant les unités de stockage 2 et servant de butée 401 à l'unité de stockage 2 dans la deuxième position. En alternative ou en complément, le système de connexion 1 peut comprendre en outre au moins un premier module 100 configuré pour coopérer avec un deuxième module 101 de façon à immobiliser l'unité de stockage 2 au moins dans sa première position, et se préférence dans sa première et dans sa deuxième position.

Le système de connexion peut en effet comprendre un premier module 100 configuré pour coopérer avec un deuxième module 101 de façon à former un verrou bistable. La mise en continuité fonctionne de façon synergique avec l'utilisation d'un verrou bistable. En effet, le verrou 10 bistable permet un placement précis de l'unité de stockage 2 dans deux positions, le deuxième jeu de connecteurs 111 peut être disposé de façon suffisamment précise pour être en contact avec l'unité de stockage adjacente, et notamment les connecteurs 110 du système de connexion 1 adjacent.

Le système de connexion 1 peut comprendre un premier module 100 de connexion magnétique configuré pour coopérer avec un deuxième module 101 de connexion magnétique, et former un verrou magnétique 10. Le premier module 100 est en outre apte à être solidarisé de l'unité de stockage 2. Comme décrit plus en détail ultérieurement, le deuxième module 101 peut appartenir à un système de connexion 1 distinct ou à un support 40 d'un dispositif d'alimentation 4.

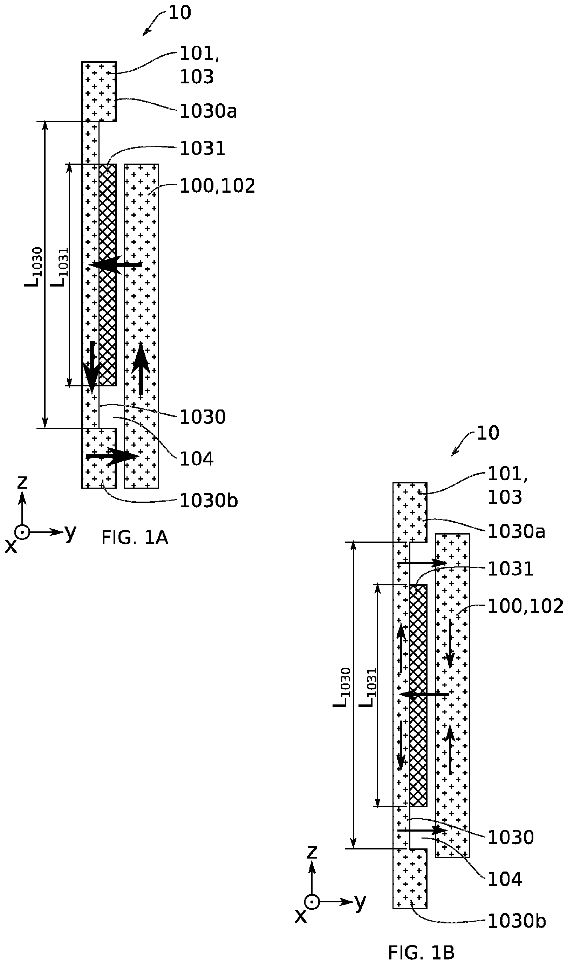

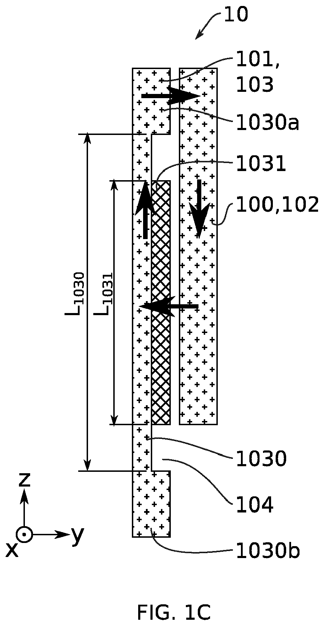

Comme l'illustre la figure 1A, le verrou magnétique 10 peut présenter une première configuration dans laquelle le premier module 100 et le deuxième module 101 sont attirés magnétiquement l'un à l'autre. Le premier module 100 peut être apte à être solidarisé de l'unité de stockage 2. Dans la première configuration, l'unité de stockage 2 est ainsi immobilisée dans une première position. Comme l'illustre la figure 1C, le verrou magnétique 10 peut présenter une deuxième configuration dans laquelle le premier module 100 et le deuxième module 101 sont aussi attirés magnétiquement l'un à l'autre. Les positions relatives du premier module 100 et du deuxième module 101 sont différentes entre la première et la deuxième configuration. Le premier module 100 étant apte à être solidarisé à l'unité de stockage 2, l'unité de stockage 2 peut être immobilisée dans une deuxième position, distincte de la première position. Le verrou magnétique 10 peut ainsi être assimilé à un verrou magnétique bistable permettant de déplacer l'unité de stockage 2 relativement à une autre unité de stockage 2 et/ou à un support 40 d'un dispositif d'alimentation 4, entre deux positions déterminées par le verrou magnétique 10.

De façon synergique entre les connecteurs 11 et le premier module 100 de connexion, le système de connexion 1 permet d'assembler magnétiquement et électriquement des unités de stockage 2 entre elles et/ou au dispositif d'alimentation 4, et ainsi simplifier le montage d'un dispositif d'alimentation 4. Grâce à la formation d'un verrou magnétique 10 bistable, l'unité de stockage 2 est mobile entre ses deux positions, de façon à faciliter la mise en continuité électrique par basculement entre ses deux configurations. L'attraction magnétique peut en outre assurer une pression de contact des connecteurs 11, et assurer leur raccordement électrique dans la première et la deuxième configuration.

Le principe de fonctionnement du verrou magnétique est tout d'abord décrit en référence aux figures 1A à 1C. Comme illustré par les figures 1A et 1C, le verrou magnétique 10 comprend un premier module 100 et un deuxième module 101 configuré ensemble pour former un circuit magnétique de faible reluctance dans les première et deuxième configurations. Dans la première configuration et la deuxième configuration, le premier module 100 et le deuxième module 101 peuvent être en continuité magnétique. Un circuit magnétique de réluctance faible permet, pour une valeur de champ magnétique donnée, de générer un flux magnétique important et donc une force d'attraction importante. La précision de l'immobilisation de l'unité de stockage 2 dans chacune de ses positions, est ainsi maximisée. La reluctance du circuit permet la génération d'une force d'attraction suffisante pour maintenir ensemble le premier module 100 et le deuxième module 101. À titre d'exemple, la reluctance peut être sensiblement égale à 1.10⁸ H⁻¹ (unité : Henry) pour une induction de 0,3 T (unité : Tesla) et un effort généré de sensiblement 10 à 15 N (unité Newton).

La réluctance magnétique peut être sensiblement égale dans la première configuration et dans la deuxième configuration. L'une parmi la première et la deuxième configuration peut présenter une reluctance magnétique supérieure à l'autre parmi la première et la deuxième configuration. Le basculement de la configuration de reluctance supérieure vers la configuration de reluctance inférieure est ainsi facilité.

Pour cela, le premier module 100 comprend :
- un premier organe de conduite 102 d'un champ magnétique à base ou fait d'au moins un matériau magnétiquement conducteur, ou
- un deuxième organe de conduite 103 d'un champ magnétique à base ou fait d'au moins un matériau magnétiquement conducteur, présentant une cavité dans laquelle un aimant 1031 est logé.

Selon que le premier module comprenne l'un ou l'autre des premier et deuxième organes de conduite 102, 103, le deuxième module 101 comprend l'organe de conduite complémentaire.

Selon l'exemple illustré par les figures 1A à 1C, le deuxième organe de conduite 103 peut comprendre une cavité 1030 configurée pour accueillir au moins en partie un aimant 1031. L'aimant 1031 peut être un électroaimant. De préférence, l'aimant 1031 est un aimant permanent de sorte que le verrou magnétique 10 est passif et donc fonctionne sans apport extérieur d'énergie.

Dans la première configuration, par exemple illustrée par la figure 1A, le verrou magnétique 10 est configuré de sorte que le premier organe de conduite 102 est au moins en partie, et de préférence totalement, en regard avec l'aimant permanent 1031 et une bordure 1030b de la cavité 1030 du deuxième organe 103. Dans la deuxième configuration, par exemple illustrée par la figure 1C, le verrou magnétique 10 est configuré de sorte que le premier organe de conduite 102 est au moins en partie, et de préférence totalement, en regard avec l'aimant permanent 1031 et une bordure 1030a de la cavité 1030. Plus particulièrement, le premier organe de conduite 102 s'étend au moins entre l'aimant permanent 1031 et l'une ou l'autre bordure 1030a, 1030b de la cavité 1030, selon la configuration du verrou 10. Ainsi, un circuit magnétique peut être créé entre l'aimant 1031 et se propage dans le deuxième organe de conduite 103, puis dans le premier organe 102 par le biais de la bordure 1030a, 1030b, pour atteindre à nouveau l'aimant 1031, comme l'illustre les flèches en figures 1A et 1C. Le passage de la première à la deuxième configuration du verrou magnétique 10 peut être effectué par une rotation, une combinaison de translation et de rotation, et de préférence par une translation, entre les premier 100 et deuxième 101 modules.

Lorsque le flux magnétique est important, la force d'attraction générée est importante. Par exemple, pour décoller ou arracher l'un ou l'autre des modules de connexion 100, 102 suivant la direction y, l'effort nécessaire est important car cela nécessite une variation importante et rapide du flux magnétique circulant dans le circuit magnétique. Le déplacement suivant la direction du déplacement relatif des modules 100, 101 entre la première et la deuxième configuration, par exemple la direction z, nécessite un effort inférieur car la variation du flux magnétique est plus progressive. Par exemple, l'ordre de grandeur entre les efforts à appliquer entre ces deux directions peut être d'un facteur 10.

Le système de connexion 1 peut ainsi permettre une immobilisation efficace de l'unité de stockage 2 dans l'une ou l'autre des première et deuxième positions, tout en assurant une bonne solidité du montage formé par le système de connexion 1.

Notons que lorsque plusieurs unités de stockage 2 sont assemblées ensemble par leur système de connexion 1, et notamment lorsqu'au moins une unité de stockage 2 est dans sa deuxième position, par exemple comme illustré dans les figures 13 et 16B, tous les verrous magnétiques 10 ne sont pas nécessairement configurés de sorte que le premier organe de conduite 102 est totalement en regard avec l'aimant permanent 1031. Il est possible de décaler le premier ou le deuxième module 100, 101 d'un verrou par rapport au module complémentaire, sans impacter fortement la réluctance du circuit, et donc en gardant une force d'attraction suffisante pour immobiliser de façon suffisamment forte et précise l'unité de stockage 2 dans sa première et sa deuxième position. Plus particulièrement, la première et/ou la deuxième position est alors une position d'équilibre dans laquelle l'effort généré par l'ensemble des verrous magnétiques 10 portés par le système de connexion de l'unité de stockage 2, et de préférence par chaque unité de stockage 2, est maximal. Cette position est notamment déterminée par la géométrie et la construction du système de connexion.

Le verrou magnétique 10 peut présenter en outre une troisième configuration, intermédiaire entre les première et deuxième configurations. Dans la troisième configuration, le premier module 100 est configuré pour coopérer avec le deuxième module 101 de façon à former un circuit magnétique à reluctance élevée, notamment de reluctance supérieure à celle des première et deuxième configurations, de préférence 5 à 10 fois supérieure. Le circuit magnétique de réluctance élevée permet, pour une valeur de champ magnétique donnée, de générer un flux magnétique faible et donc une faible force d'attraction. Cette configuration intermédiaire est plus instable que les deux autres, assurant par défaut l'immobilisation de l'unité de stockage 2 dans la première ou la deuxième position. De préférence, la reluctance du circuit dans la troisième configuration permet la génération d'une force d'attraction suffisante pour maintenir ensemble le premier module 100 et le deuxième module 101, cette force étant inférieure à celle générée dans les configurations stables. La force générée, proportionnelle à la reluctance, dans une configuration instable peut être sensiblement 5 à 10 fois inférieure à la force générée dans une configuration stable. À titre d'exemple, pour une réluctance de 1.10⁸ H⁻¹ dans une configuration stable, on pourrait avoir une reluctance de 5.10⁸ à 10.10⁸ H⁻¹.

De préférence, dans toutes les configurations intermédiaires entre la première et la deuxième configuration, le verrou magnétique 10 est configuré pour maintenir ensemble le premier module 100 et le deuxième module 101. Ceci permet de maintenir la cohésion du verrou magnétique 10, et donc par exemple la cohésion entre les unités de stockage 2 durant le passage de l'une à l'autre des première et deuxième positions. Le verrou magnétique peut être configuré pour présenter un gradient de force d'attraction entre la première et la deuxième configuration, évoluant de façon continue de la première à la deuxième configuration, en passant par l'ensemble des configurations instables, ainsi que dans le sens inverse. Au moins une des configurations instables peut présenter une reluctance 5 à 10 fois supérieure à celle d'une des configurations stables.

De préférence, l'aimant permanent 1031 et chacune des bordures 1030a, 1030b de la cavité 1030 sont séparés par un matériau non conducteur magnétiquement, par exemple un matériau non ferromagnétique, comme l'air ambiant ou un isolant électrique solide comme par exemple du plastique. Cette séparation constitue un entrefer 104, ce qui correspond à la partie d'un circuit magnétique où le flux d'induction circule moins que dans le reste du circuit magnétique, et de préférence où le flux ne circule pas. La présence d'un entrefer 104 de part et d'autre de l'aimant permanent 1031 permet de définir deux configuration stables séparées par une configuration moins stable, et de préférence instable. Pour cela, selon la direction du déplacement relatif des premier et deuxième modules 100, 101, la cavité 1030 peut présenter une longueur L₁₀₃₀ supérieure à la longueur L₁₀₃₁ selon cette même direction. En outre, la longueur du deuxième organe de conduite 102 selon cette direction peut être sensiblement égale et de préférence inférieure à la longueur L₁₀₃₀ de la cavité 1030.

Dans la troisième configuration, le flux magnétique circule par les entrefers 104. La reluctance du circuit magnétique est alors augmentée et l'effort d'attraction généré est réduit par rapport aux première et deuxième configurations, comme l'illustrent les flèches de taille inférieure en figure 1B par rapport aux figures 1A et 1C. De préférence, bien que moindre par rapport aux première et deuxième configurations, l'effort d'attraction tend à maintenir en contact les premier et deuxième modules 100,101. La cohésion du verrou magnétique 10 peut ainsi être permise lors du passage de l'une à l'autre des première et deuxième positions. Le système de connexion 1 cherche donc naturellement à occuper l'une des deux configurations stables et n'est pas susceptible occuper la troisième configuration sans y être contraint. Ainsi, le risque d'un basculement accidentel du verrou 10 de la première configuration à la deuxième configuration est minimisé. Sous l'action d'une force, par exemple générée par un opérateur, le verrou magnétique 10 peut être passé dans sa configuration intermédiaire, puis désolidarisé par exemple selon un mouvement selon l'axe y. Depuis la première configuration et/ou la deuxième configuration, sous l'action de cette force, le verrou magnétique 10 peut en outre être démonté en déplaçant relativement les premier et deuxième modules 100, 101 dans la direction du passage de l'une à l'autre des configurations stables, par exemple selon l'axe z, en dépassant les configurations de stabilité, avant par exemple d'appliquer le force selon y. Le système de connexion 1 permet ainsi de démonter l'unité de stockage 2.

Le flux magnétique peut dépendre de la nature de l'aimant permanent 1031 et de son induction. L'induction de l'aimant permanent 1031 peut par exemple être sensiblement comprise entre 0,1 Tesla à 1,5 Tesla, par exemple pour un aimant à base d'un alliage néodyme fer bore NdFeB. Par exemple, l'induction d'un plasto-aimant peut sensiblement être égale à 0,3 Tesla. L'induction peut sensiblement être au moins égale à 1,3 Tesla pour un aimant en Alnico, une famille d'alliages ferromagnétiques à base d'aluminium (Al), de nickel (Ni) et de cobalt (Co). Le flux magnétique peut dépendre de la réluctance du circuit magnétique. Dans les configurations stables, les premier et deuxième modules 100, 101 forment une continuité magnétique et la reluctance est faible. Pour une induction générée par l'aimant donnée, le flux magnétique est important générant ainsi une force d'attraction importante.

Selon un exemple, dans les configurations stables, les premier et deuxième modules 100, 101 peuvent être en contact l'un de l'autre au niveau de l'aimant permanent 1031 et au niveau de l'une ou l'autre de la bordure 1030a, 1030b de leur cavité. Ce contact peut être direct ou par l'intermédiaire d'une couche d'air ou d'un matériau diélectrique d'épaisseur permettant la circulation du flux magnétique, par exemple inférieure à 0,5 mm, et de préférence inférieur à 0,1 mm.

De préférence, le matériau magnétiquement conducteur est un matériau ferromagnétique. Ainsi, le matériau est un bon conducteur du flux magnétique en présentant une faible réluctance. De préférence, le matériau est un matériau ferromagnétique doux. Un matériau ferromagnétique doux est capable de s'aimanter lorsqu'il est soumis à un champ magnétique. En l'absence d'un champ magnétique, le matériau ferromagnétique doux ne conserve qu'une faible et de préférence pas d'aimantation rémanente. Plus préférentiellement, l'aimantation rémanente du matériau ferromagnétique doux est nulle en l'absence du champ magnétique. L'utilisation d'un matériau ferromagnétique doux assure une bonne réactivité des modules de connexion 100, 101. Selon un exemple, le matériau magnétiquement conducteur est du fer doux, un matériau économiquement abordable. Le matériau magnétiquement conducteur peut être de l'acier inoxydable doux.

La géométrie des organes de conduite de champ 102, 103 peut varier selon différents exemples de réalisation. Par exemple, l'ensemble formé par les deux organes de conduite de champ 102, 103 peut être de forme cylindrique d'axe central sensiblement confondu avec un axe d'extension principal de l'aimant 1031. De façon alternative, l'ensemble formé par les deux organes de conduite de champ 102, 103 peut être de forme rectangulaire d'axe d'extension principale sensiblement confondu avec un axe d'extension principale de l'aimant 1031. Il n'est par exemple pas nécessaire que cet ensemble ait une forme de révolution autour de l'aimant 1031.

L'agencement des modules 100, 101 de connexion est maintenant décrit en référence aux figures 2A et 2B. Le système de connexion 1 peut comprendre une pluralité de premier et/ou deuxième modules 100, 101 afin d'améliorer et/ou d'augmenter la connectivité potentielle du système 1. Selon l'exemple illustré en figure 2A, le système de connexion peut comprendre au moins un premier module 100, et un deuxième module 101 situés sur le pourtour externe de la paroi 12, de part et d'autre du système de connexion 1, par exemple selon la direction y. Ainsi, des unités de stockage 2 peuvent être assemblées latéralement les unes avec les autres, au moins selon une direction.

Selon l'exemple illustré en figure 2B, le système de connexion peut comprendre plusieurs premier ou deuxième modules 100, 101, répartis sur le pourtour externe de la paroi 12, de préférence à intervalle régulier dans un plan perpendiculaire à la direction de déplacement relatif des modules 100, 101, par exemple un plan horizontal et/ou sensiblement perpendiculaire à l'axe A. Ainsi, des unités de stockage 2 peuvent être assemblées latéralement les unes avec les autres, au moins dans un plan. Selon l'exemple illustré, quatre modules 100, 101 peuvent être disposés sur le pourtour externe de la paroi 12 à intervalle d'environ 90 °.

Selon le choix du type de module de connexion magnétique 100 ou 101 et leur agencement, le système de connexion 1 permet un détrompage. Le détrompage peut être réalisé de sorte qu'une seule orientation relative d'un système de connexion 1 par rapport à un autre ou par rapport au dispositif d'alimentation 4, permette le raccordement électrique de l'unité de stockage 2. Le détrompage permet ainsi d'éviter un mauvais montage d'une unité de stockage 2, par exemple un montage inversé en termes de polarité. Seul des modules de connexion 100, 101 complémentaires et disposés en regard peuvent permettre la formation du verrou magnétique 1 et donc l'immobilisation de l'unité de stockage 2.

Par exemple, le système de connexion 1 peut comprendre deux premiers modules 100 comprenant le premier organe de conduite 102, disposés dans un premier plan, et deux deuxièmes modules 101 comprenant le deuxième organe de conduite 103, disposés dans un deuxième plan distinct, chacun de ses plans pouvant inclure l'axe central A. De préférence, ces deux plans sont perpendiculaires. De façon alternative ou complémentaire, la disposition selon la direction verticale z peut varier entre les paires de modules 100, 101, de sorte qu'une seule orientation du système de connexion 1 permette un raccordement électrique entre les connecteurs 11.

Notons, qu'on peut prévoir de disposer plusieurs modules de connexion 100, 101 sur le pourtour de la paroi 12 selon une direction verticale, et/ou sensiblement parallèle à l'axe A, ce qui permet d'obtenir des efforts mécaniques mieux répartis et de minimiser le risque de rotation involontaire du système de connexion 1.

Comme illustré sur les figures 3A et 3B, le premier module 100 d'un système de connexion 1 peut être assemblé avec le deuxième module 101 d'un système de connexion 1 distinct, ce qui permet de générer une force magnétique d'attraction maintenant deux unités de stockage 2 ensemble. Dans la première configuration du verrou magnétique 10, la force magnétique d'attraction peut en outre assurer une pression de contact des connecteurs 11 raccordés aux pôles positifs 20 et négatifs 21 de chaque unité de stockage 2. Ce contact permet ainsi la mise connexion électrique et la circulation du courant d'une unité de stockage 2 à l'autre.

La paroi 12 est maintenant décrite en relation aux figures 3A et 3B, et 4 à 5C. La paroi 12 peut être configurée de façon à former une gaine montée sur l'unité de stockage 2, et plus particulièrement autour de son godet, par exemple comme illustré dans les figures 3A et 3B. La paroi 12 peut être à base ou fait d'au moins un matériau isolant électriquement, afin d'isoler le godet de l'unité de stockage 2 de son environnement. Ce matériau peut être un plastique thermodur, par exemple de type époxy, ou thermoplastique. La paroi 12 peut ainsi être mise en forme facilement par moulage.

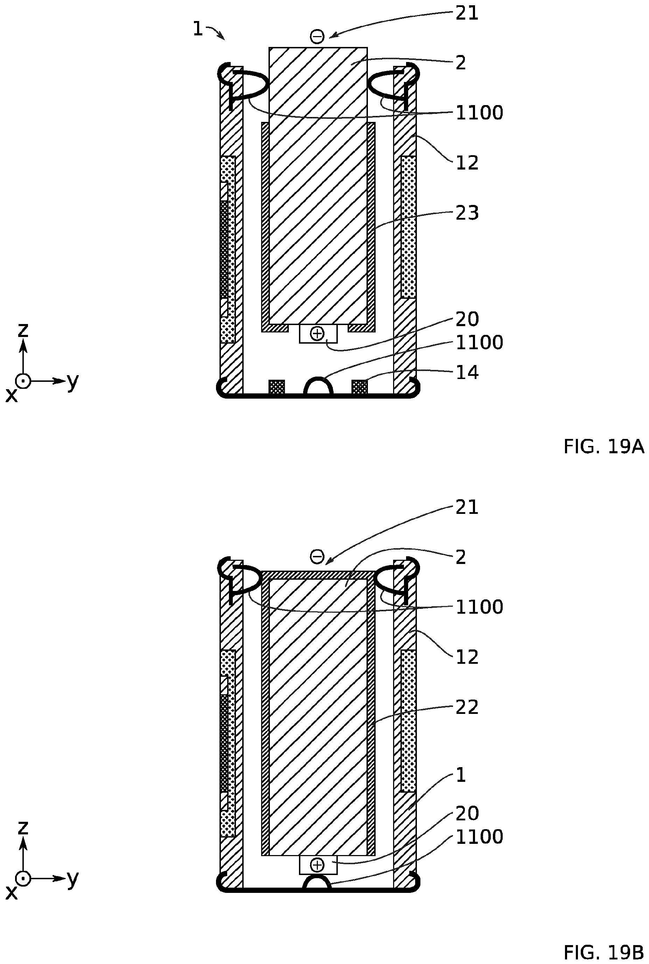

La gaine entourant l'unité de stockage 2 peut comprendre un circuit imprimé et/ou des pièces métalliques embouties et moulées dans le matériau de la paroi 12. La gaine peut en outre comprendre au moins un et de préférence plusieurs éléments de fixation 14 de la paroi 12 à l'unité de stockage 2, décrits plus en détail ultérieurement en référence aux figures 19A à 19E.

Afin de raccorder électriquement la gaine fonctionnelle aux pôles de l'unité de stockage 2, le système de connexion 1 peut en outre comprendre des connecteurs électriques 1100 de la paroi 12 à l'unité de stockage 2, décrit plus en détail ultérieurement en référence aux figures 19A à 19E.

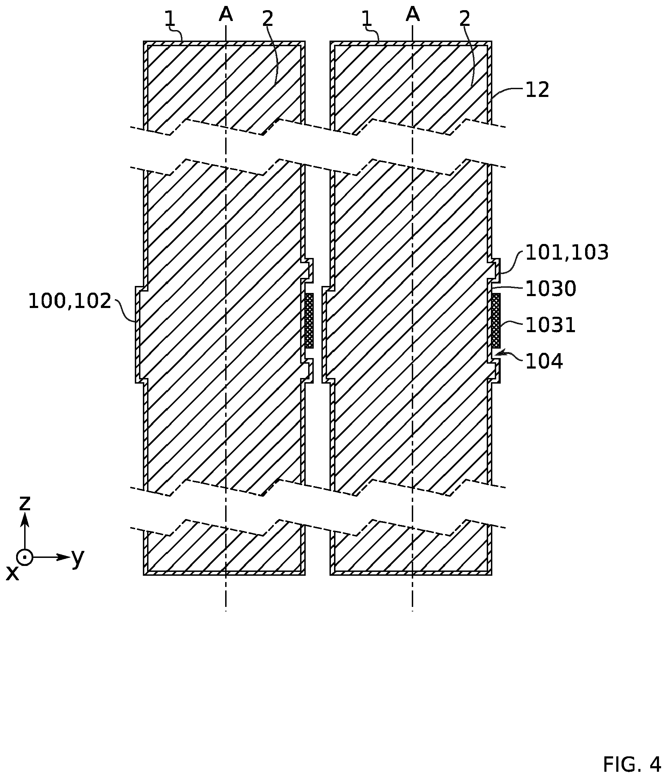

La paroi 12 peut être configurée de façon à former un godet de l'unité de stockage 2, par exemple comme illustré par les figures 4 à 6B. Le godet peut à base ou fait d'au moins un matériau électriquement conducteur, et de préférence magnétiquement conducteur. Le godet peut plus particulièrement être à base ou fait d'acier inoxydable magnétique. Une portion de la paroi 12 peut être mise en forme de façon à former au moins en partie l'un ou l'autre du premier organe 102 et du deuxième 103 organe de conduite de champ. Par exemple, la paroi 12 peut présenter des reliefs correspondant à l'un ou l'autre du premier organe 102 et du deuxième 103 organe de conduite de champ. L'aimant permanent 1031 peut être collé sur la paroi, ou l'un et/ou l'autre du premier organe 102 et du deuxième 103 organe de conduite de champ peuvent être surmoulés dans une matière isolante, de sorte que les parties des organes de conduite de champ destinées à être en contact magnétiquement restent apparentes.

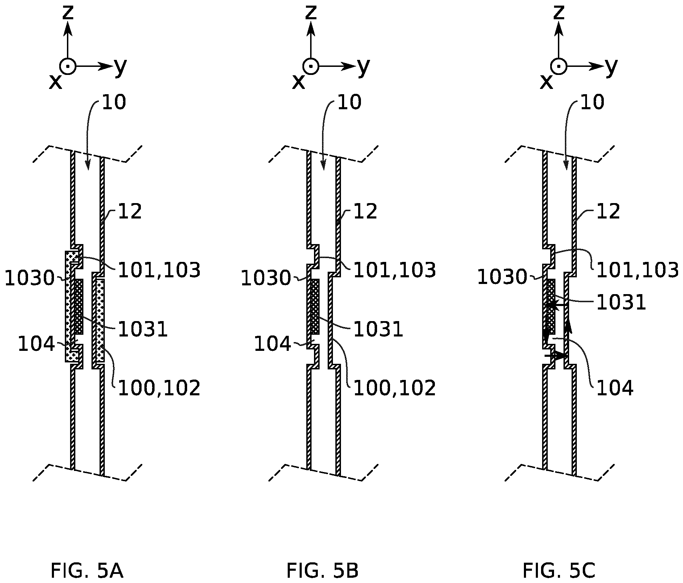

Comme illustré dans la figure 5A, la paroi 12 peut présenter des reliefs configurés pour accueillir des pièces magnétiquement conductrices pour former l'un ou l'autre du premier organe 102 et du deuxième 103 organe de conduite de champ avec en outre l'aimant permanent 1031.

En alternative, comme illustré par les figures 5B et 5C, la paroi peut former, le cas échéant à elle seule avec l'aimant permanent 1031, l'un ou l'autre du premier organe 102 et du deuxième 103 organe de conduite de champ. Pour cela, la paroi 12 présente de préférence une épaisseur supérieure à 1 mm, afin d'assurer une bonne conduction du flux magnétique. La profondeur des reliefs peut être de l'ordre de l'épaisseur de la paroi 12.

Les reliefs de la paroi 12 peuvent être formés par pliage, par emboutissage dans la tôle, de façon à déformer localement la paroi 12. On peut par ailleurs prévoir que ces reliefs soient usinés. De préférence, les reliefs formés par emboutissage présentent des angles arrondis, pour que la déformation de la paroi 12 reste acceptable et limiter l'usure de l'outil d'emboutissage. La figure 5C montre le cheminement du flux magnétique dans le verrou magnétique formé par deux godets, le flux circulant entre les godets étant illustré par les flèches.

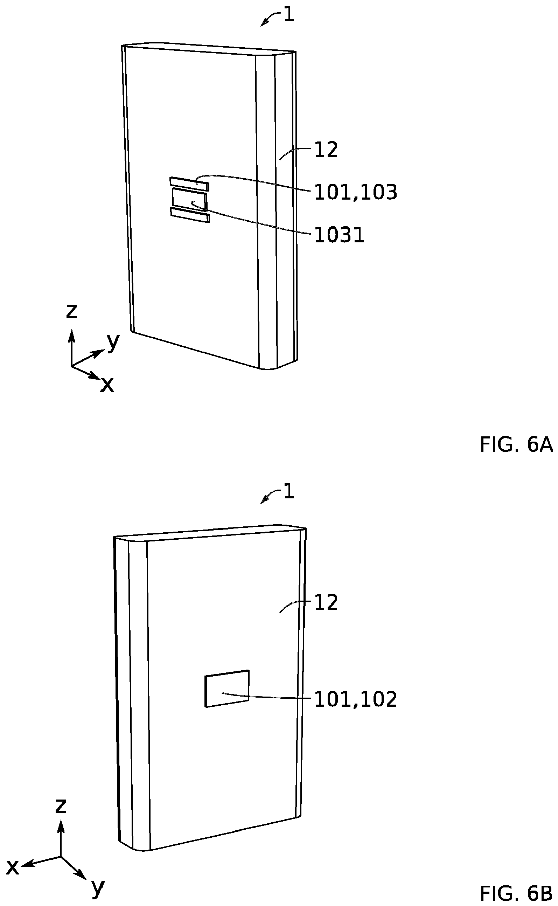

Le système de connexion 1, et notamment la forme de la paroi 12, peut être adapté en fonction de la géométrie de l'unité de stockage 2. Par exemple, l'unité de stockage 2 peut être cylindrique, par exemple comme illustré en figure 2B, ou prismatique, et notamment rectangulaire, comme illustré dans les figures 6A et 6B. La paroi 12 peut présenter une épaisseur comprise entre 1 et 3 mm, afin notamment de limiter le poids du système de connexion 12.

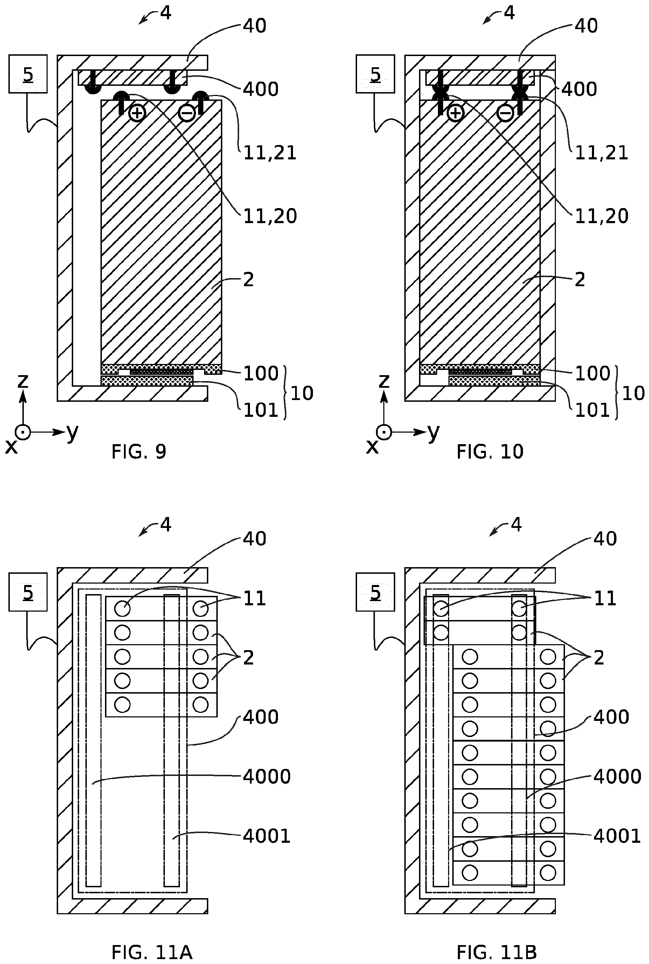

Par ailleurs, les exemples précédemment illustrés détaillent des modes de réalisations dans lesquels le système de connexion 1 est adapté sur une unité de stockage dont les pôles positif 20 et négatif 21 sont opposés selon la direction z. On peut prévoir que le système de connexion 1 soit configuré pour raccorder électrique une unité de stockage 2 dont les pôles positif 20 et négatif 21 sont disposés sur une même face ou un même côté, comme par exemple illustré par les figures 9 et 10.

Un exemple de coopération entre un dispositif d'alimentation 4 d'un appareil 5, et au moins un système de connexion 1 est maintenant décrit en référence aux figures 9 et 10. Le dispositif d'alimentation 4 peut comprendre un support 40 configuré pour recevoir au moins une unité de stockage 2 comprenant le système de connexion 1. Le support 40 peut former une enceinte ou un boitier, configuré pour contenir au moins partiellement, et de préférence totalement, l'unité ou les unités de stockage 2 au moins dans leur première position. Le support 40 peut être configuré pour contenir, de préférence totalement, l'unité ou les unités de stockage 2 dans leur première position et dans leur deuxième position. L'unité ou les unités de stockage 2 peuvent être mobiles relativement au support 40 entre leur première et leur deuxième positions. Le support 40 peut présenter au moins un module de connexion magnétique 100, 101 configuré pour coopérer avec un module 100, 101 complémentaire d'un système de connexion 1.

Le support 40 peut comprendre au moins deux modules 100, 101, chacun configuré pour coopérer avec un module 100, 101 complémentaire d'un système de connexion 1, de part et d'autre d'un ensemble d'alimentation 3, comme décrit par exemple en figure 16A. Le support 40 peut en outre comprendre un bus de puissance 400 configuré pour être raccordé par les connecteurs 11 du système de connexion 1 à l'unité de stockage 2. Dans la deuxième configuration du verrou magnétique 10, l'unité de stockage 2 peut ne pas être raccordée au dispositif d'alimentation 4. Le basculement de la deuxième configuration à la première configuration entraine le déplacement de l'unité de stockage 2 et son raccordement électrique par les connecteurs 11, comme l'illustre le passage de la figure 9 à la figure 10.

Le dispositif d'alimentation 4 peut comprendre une pluralité d'unités de stockage 2, chacune comprenant de préférence un système de connexion 1. Comme l'illustre la figure 11A, grâce au système de connexion 1, chaque unité de stockage 2 peut être mise dans une position dans laquelle les connecteurs 11 ne sont pas raccordés électriquement au pôle positif 4000 et au pôle négatif 4001 d'un bus de puissance 400. Grâce au verrou magnétique 10, le système de connexion 1 peut être déplacé à une position dans laquelle les connecteurs 11 sont raccordés électriquement au bus de puissance 400.

Afin de permettre un raccordement en série et en parallèle par le système de connexion 1, et de préférence une mise en continuité électrique à la fois en série et en parallèle, une pluralité de verrou magnétique 10 peut être utilisée. Chacune des paires 110, 111 et 110' 111' de connecteurs peut être associée à un module de connexion magnétique 100, 101, de sorte qu'un verrou magnétique 10 distinct soit formé pour chacune des première 110, 111 et deuxième 110', 111' paires de connecteurs 11. Selon le choix du type de module de connexion magnétique 100 ou 101 et leur agencement, comme décrit précédemment, un détrompage permet d'éviter un mauvais raccordement entre série et parallèle.

Les connecteurs électriques 11, 110, 111 sont de préférence montés sur la paroi 12 du système de connexion 1. Lorsque la paroi 12 est à base ou faite d'un matériau isolant, les différents connecteurs électriques 11, 110, 111 peuvent être intégrés sur ou dans la paroi 12 sur forme de méplat conducteur ou éventuellement de fil, l'ensemble étant isolé par le matériau de la gaine.

Afin de permettre un contact efficace entre un système de connexion 1 et le support 40 et/ou d'autres systèmes de connexion 1, les connecteurs 11, 110, 111 peuvent comprendre des contacts électriques 1101, 1110 électriquement conducteurs et de préférence élastiques. Ces contacts électriques peuvent par exemple être des lamelles élastiques et conductrices, par exemple à base de cuivre et de préférence en cuivre béryllium. Les contacts à base de cuivre sont courants du fait de la bonne conductibilité électrique de ces matières. L'alliage de cuivre béryllium présente de très bonnes performances mécaniques, notamment en termes d'élasticité, tout en assurant une très bonne conduction électrique. Le choix dans les nuances et les duretés du matériau conducteur permet de réaliser des contacts plus ou moins rigides, ou très élastiques avec un fort effet ressort.

Lorsque la paroi 12 du système de connexion 1 forme une gaine de l'unité de stockage 2, la paroi 12 peut en outre comprendre au moins un et de préférence plusieurs connecteurs électriques 1100 de la paroi à l'unité de stockage 2, décrit en référence aux figures 19A et 19B. Les connecteurs 1100 peuvent comprendre des contacts électriques électriquement conducteurs et de préférence élastiques, configurés pour venir en appui sur les pôles positif 20 et négatif 21 de l'unité de stockage 2. De même que pour les connecteurs 11, 110, 111, ces contacts peuvent par exemple être des lamelles élastiques et conductrices, par exemple à base de cuivre et de préférence en cuivre béryllium. De façon alternative ou complémentaire, les connecteurs 1100 peuvent être fixés, par exemple soudés, aux pôles positif 20 et négatif 21 de l'unité de stockage 2.

Les connecteurs 110, 111, 1100 en cuivre béryllium peuvent être fabriqués à partir de feuillard de cuivre fin. Les connecteurs et/ou les contacts électriques peuvent recevoir divers traitements connus pour augmenter leur conductivité ou pour améliorer les couples galvaniques, et/ou pour les protéger contre l'oxydation et la corrosion.

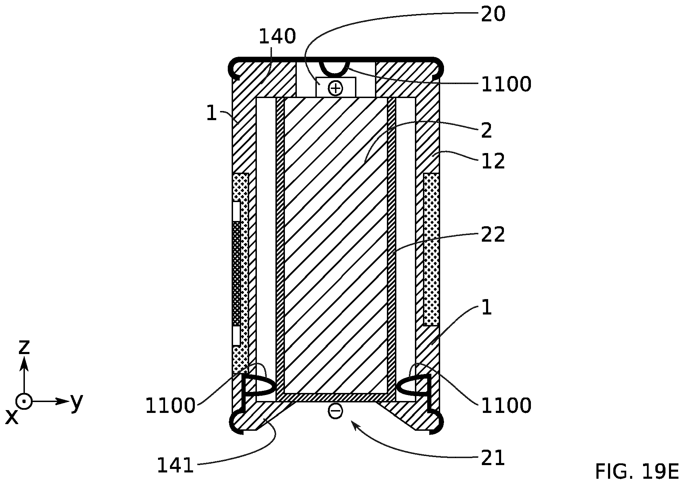

Pour monter l'unité de stockage 2 dans le système de connexion 1, si l'unité de stockage 2 comprend déjà une gaine 23 isolante, la gaine 23 de l'unité de stockage 2 peut être en partie retirée pour dégager une polarité, généralement négative. Cette opération peut être réalisée par découpe laser ou à l'aide d'un outil manuel. Les connecteurs 1100 peuvent ainsi relier la polarité dégagée au reste du système de connexion 1, comme illustré par exemple par la figure 19A. Selon un autre exemple, dans lequel l'unité de stockage 2 comprend un godet 22 métallique conducteur, généralement de polarité négative, les connecteurs 1100 peuvent relier la polarité du godet 22 au reste du système de connexion 1, comme illustré par exemple par les figures 19B ou 19E.

Lorsque la paroi 12 forme une gaine de l'unité de stockage 2, la paroi 12 peut en outre comprendre au moins un et de préférence plusieurs éléments de fixation 14 de la paroi 12 à l'unité de stockage 2, décrits dans la suite en référence aux figures 19A à 19E. Les éléments de fixation 14 peuvent être configurés de sorte que le système de connexion 1, notamment par la paroi 12, est monté de façon amovible sur l'unité de stockage 2, manuellement ou par l'intermédiaire d'outils.

Selon un premier exemple illustré par la figure 19A, les éléments de fixation 14 peuvent être des aimants configurés pour exercer une force d'attraction sur l'unité de stockage 2 pour la maintenir dans le système de connexion 1. Selon un exemple, le godet de l'unité de stockage 2 peut être magnétique, et plus particulièrement en hilumin. L'hilumin est un acier de type DC04 revêtu d'un nickelage électrolytique.

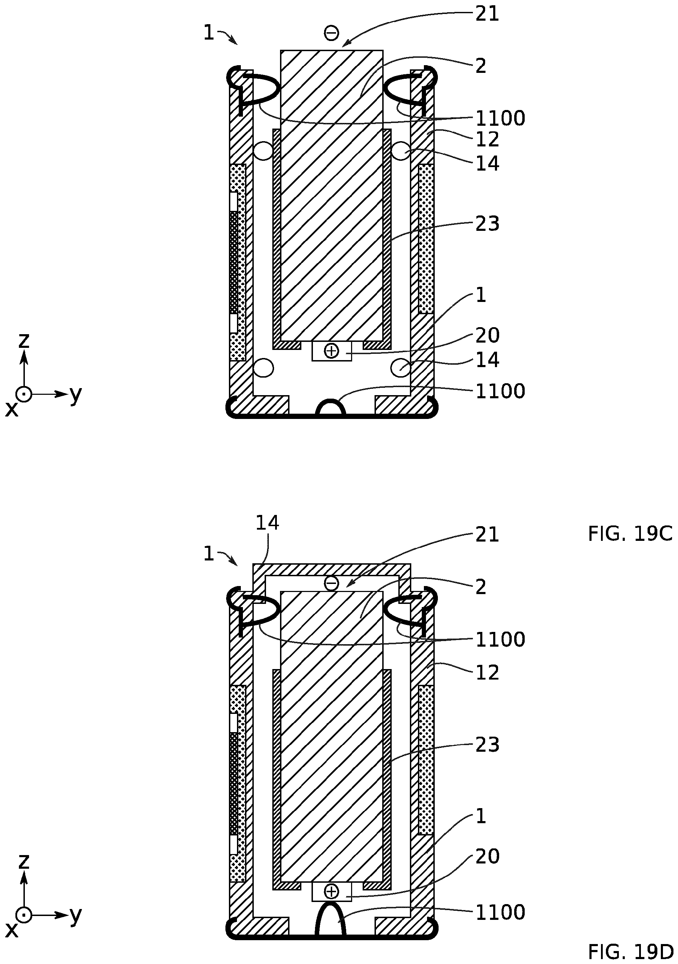

Selon un autre exemple illustré par la figure 19C, les éléments de fixation 14 peuvent être des organes élastiques et/ou déformables. Deux rondelles déformables peuvent être disposées sur le pourtour interne de la paroi 12 afin de maintenir l'unité de stockage 2 dans le système de connexion 1. Le matériau déformable peut être du caoutchouc, par exemple du butyl-caoutchouc ou du caoutchouc-nitrile ou autre dérivé. Ces matériaux présentent avantageusement un fort pouvoir d'adhésion et une capacité de déformation permettant l'introduction de l'unité de stockage et son maintien dans le système de connexion 1. En outre, les éléments de fixation 14 peuvent alors assurer une étanchéité vis-à-vis de l'eau entre l'unité de stockage 2 et le milieu extérieur au système de connexion 1.

Selon un autre exemple illustré par la figure 19D, l'élément de fixation 14 peut être un couvercle configuré pour refermer la paroi 12 du système de connexion 1, afin de maintenir l'unité de stockage 2 dans la paroi. Le couvercle peut être fixé à la paroi 12, par exemple collé, soudé ou simplement enclenché de force.

L'élément de fixation 14 peut en alternative être un collier ou une bague, par exemple un circlip. La paroi 12 peut présenter une gorge de fixation de l'élément de fixation 14 sur son pourtour interne. L'élément de fixation 14 peut par exemple être inséré dans la gorge manuellement ou à l'aide d'une pince. Ce type de fixation présente comme avantage de se démonter facilement.

Selon un autre exemple illustré par la figure 19E, les éléments de fixation 14 peuvent comprendre une première butée 140 et une deuxième butée, configurées pour bloquer mécaniquement l'unité de stockage 2 dans le système de connexion 1. Pour cela, la première butée 140 peut être disposée à une extrémité de la paroi 12 et former une surface d'appui de l'unité de stockage 2 au fond du système de connexion 1. La deuxième butée 141 peut être disposée à l'autre extrémité de la paroi 12, le long du pourtour de la paroi 12. La deuxième butée 141 peut être configurée de façon à autoriser l'insertion de l'unité de stockage dans le système de connexion 1 et à bloquer son retrait. Pour cela, la deuxième butée 141 peut être déformable élastiquement, et configurée de sorte que l'unité de stockage 2 est insérée à travers la deuxième butée 141, par le biais d'une ouverture centrale, en déformant élastiquement la butée 141. Lorsque l'unité de stockage 2 est entièrement passée par la deuxième butée 141, la deuxième butée retrouve sa forme initiale et maintien l'unité dans le système de connexion 1. La deuxième butée 141 peut notamment présenter une ouverture centrale dont la bordure est de forme biseautée, l'ouverture centrale étant de dimensions inférieures à celles de la section transverse de l'unité de stockage 2.

Au vu de la description qui précède, il apparaît clairement que l'invention propose un système de connexion permettant une continuité de service d'un dispositif d'alimentation électrique en cas de défaillance d'une unité de stockage.

L'invention n'est pas limitée aux modes de réalisations précédemment décrits et s'étend à tous les modes de réalisation couverts par l'invention. La présente invention ne se limite pas aux exemples précédemment décrits. Bien d'autres variantes de réalisation sont possibles, par exemple par combinaison de caractéristiques précédemment décrites, sans sortir du cadre de l'invention. En outre, les caractéristiques décrites relativement à un aspect de l'invention peuvent être combinées à un autre aspect de l'invention.

### LISTE DES REFERENCES

- 1: Système de connexion
- 10: Verrou magnétique
- 100: Premier module de connexion magnétique
- 101: Deuxième module de connexion magnétique
- 102: Premier organe de conduite d'un champ magnétique
- 103: Deuxième organe de conduite d'un champ magnétique
- 1030: Cavité
- 1030a: Bordure de cavité
- 1031: Aimant permanent
- 104: Entrefer
- 11: Connecteur électriques
- 110: Première paire de connecteurs
- 110': Deuxième paire de connecteurs
- 1100: Connecteurs électriques de la paroi à l'unité de stockage
- 1101: Contacts électriques
- 1101': Contact électrique
- 111: Connecteurs de mise en continuité
- 111': Connecteurs de mise en continuité
- 1110: Contacts électriques
- 1110': Contacts électriques
- 12: Paroi
- 13: Actionneur
- 130: Organe élastique
- 131: Enveloppe fusible
- 14: Éléments de fixation
- 140: Première butée
- 141: Deuxième butée
- 2: Unité de stockage
- 20: Pôle positif
- 21: Pôle négatif
- 22: Godet
- 3: Ensemble d'alimentation
- 4: Dispositif d'alimentation
- 40: Support
- 400: Bus de puissance
- 4000: Pôle positif
- 4001: Pôle négatif
- 401: Butée
- 41: Circuit d'alimentation
- 42: Capteur
- 5: Appareil

## Revendications

1. Système (1) de connexion d'au moins une unité de stockage (2) d'énergie électrique à un circuit d'alimentation (41), **caractérisé en ce qu'**il comprend :
- une paroi (12) configurée pour entourer au moins partiellement l'unité de stockage (2) et apte à être solidarisée à l'unité de stockage (2),
- un ensemble de connecteurs électriques (11) disposés sur la paroi (12), présentant :
∘ une première configuration dans laquelle, dans une première position de l'unité de stockage (2), les connecteurs (11) forment un circuit électrique mettant en continuité électrique l'unité de stockage (2), au moins une unité de stockage (2) adjacente dans une première position et le circuit d'alimentation (41),
∘ une deuxième configuration dans laquelle, dans une deuxième position de l'unité de stockage (2), les connecteurs (11) forment un circuit électrique mettant en continuité électrique l'au moins une unité de stockage (2) adjacente dans sa première position et le circuit d'alimentation (41), et dans laquelle l'unité de stockage (2) n'est pas raccordée électriquement au circuit d'alimentation (41).

2. Système (1) selon la revendication précédente, dans lequel la paroi (12) forme un godet ou une gaine de l'unité de stockage (2).

3. Système (1) selon l'une quelconque des revendications précédentes, dans lequel l'ensemble de connecteurs électriques (11) comprend :
- un premier jeu (110) de connecteurs électriques (11) configuré dans la première configuration pour raccorder électriquement, par au moins deux contacts électriques (1101), l'unité de stockage (2), l'au moins une unité de stockage (2) adjacente et le circuit d'alimentation (41),
- un deuxième jeu (111) de connecteurs (11) configuré dans la deuxième configuration pour raccorder électriquement, par au moins deux contacts électriques (1100), l'au moins une unité de stockage (2) adjacente et le circuit d'alimentation (41), sans raccorder l'unité de stockage (2),
chaque contact électrique (1101) du premier jeu (110) de connecteurs (11) étant éloigné d'un contact électrique (1110) du deuxième jeu (111) de connecteurs (11) d'une distance sensiblement égale à une longueur de course d'un déplacement de l'unité de stockage (2) entre sa première position et sa deuxième position, selon une direction parallèle au déplacement de l'unité de stockage (2).

4. Système (1) selon l'une quelconque des revendications précédentes, dans lequel, l'ensemble de connecteurs électriques (11) comprenant un premier jeu (110) de connecteurs électriques (11) et un deuxième jeu (111) de connecteurs (11) :
- le premier jeu (110) de connecteurs électriques (11) comprend un premier connecteur configuré pour raccorder électriquement en parallèle, le pôle positif (20) de l'unité de stockage (2) au pôle positif (20) de l'au moins une unité de stockage (2) adjacente et au circuit d'alimentation, et un deuxième connecteur configuré pour raccorder électriquement en parallèle, le pôle négatif (21) de l'unité de stockage (2) au pôle négatif (21) de l'au moins une unité de stockage (2) adjacente et au circuit d'alimentation (41), dans la première configuration,
- le deuxième jeu (111) de connecteurs électriques (11) comprend un premier connecteur configuré pour raccorder électriquement en parallèle, le pôle positif (20) de l'au moins une unité de stockage (2) adjacente au circuit d'alimentation (41)), et un deuxième connecteur configuré pour raccorder électriquement en parallèle, le pôle négatif (21) de l'au moins une unité de stockage (2) adjacente au circuit d'alimentation (41), dans la deuxième configuration, le deuxième jeu (111) ne raccordant pas électriquement au moins l'un parmi le pôle positif (20) et le pôle négatif (21) de l'unité de stockage (2).

5. Système (1) selon l'une quelconque des revendications 1 à 3, dans lequel, l'ensemble de connecteurs électriques (11) comprenant un premier jeu (110) de connecteurs électriques (11) et un deuxième jeu (111) de connecteurs (11) :
- le premier jeu (110) de connecteurs électriques (11) comprend un premier connecteur configuré pour raccorder électriquement en série l'un parmi le pôle positif (20) et le pôle négatif (21) de l'unité de stockage (2) à un pôle de polarité opposée (20, 21) de l'au moins une unité de stockage (2) adjacente ou au circuit d'alimentation (2), et un deuxième connecteur configuré pour raccorder électriquement en série l'autre parmi le pôle positif (20) et le pôle négatif (21) de l'unité de stockage (2) à un pôle de polarité opposée (20, 21) de l'au moins une unité de stockage (2) adjacente ou au circuit d'alimentation (41), dans la première configuration,
- le deuxième jeu (111) de connecteurs électriques (11) comprend un connecteur configuré pour raccorder électriquement en série un pôle (20, 21) de l'au moins une unité de stockage (2) adjacente au circuit d'alimentation (41), dans la deuxième configuration, le deuxième jeu (111) ne raccordant pas électriquement au moins l'un parmi le pôle positif (20) et le pôle négatif (21) de l'unité de stockage (2).

6. Système (1) selon l'une quelconque des revendications 1 à 3, dans lequel, l'ensemble de connecteurs électriques (11) comprenant un premier jeu (110) de connecteurs électriques (11) et un deuxième jeu (111) de connecteurs (11) :
- le premier jeu (110) de connecteurs électriques (11) comprend un premier connecteur configuré pour raccorder électriquement en série, l'un parmi le pôle positif (20) et le pôle négatif (21) de l'unité de stockage (2) à un pôle de polarité opposée (20, 21) de l'au moins une unité de stockage (2) adjacente ou au circuit d'alimentation (41), et un deuxième connecteur configuré pour raccorder électriquement en série l'autre parmi le pôle positif (20) et le pôle négatif (21) de l'unité de stockage (2) à un pôle de polarité opposée (20, 21) de l'au moins une unité de stockage (2) adjacente ou au circuit d'alimentation (41), dans la première configuration,
- le deuxième jeu (111) de connecteurs électriques (11) comprend un connecteur reliant le deuxième connecteur du premier jeu (111) de connecteurs électriques (11) et configuré, dans la deuxième configuration, pour raccorder électriquement en série un pôle (20, 21) de l'au moins une unité de stockage (2) adjacente ou le circuit d'alimentation (41), au deuxième jeu (111) de connecteurs électriques (11) d'un système de connexion (1) d'une unité de stockage (2) adjacente distincte, dans sa première position, le deuxième jeu (111) ne raccordant pas électriquement au moins l'un parmi le pôle positif (20) et le pôle négatif (21) de l'unité de stockage (2).

7. Système (1) selon l'une quelconque des revendications précédentes, dans lequel, l'ensemble de connecteurs électriques (11) comprenant un premier jeu (110) de connecteurs électriques (11) et un deuxième jeu (111) de connecteurs (11) :
- le premier jeu (110) de connecteurs (11) comprend :
∘ une première paire (110) de connecteurs électriques (11) disposée selon un premier plan et configurée pour raccorder électriquement en parallèle l'unité de stockage (2), l'au moins une unité de stockage (2) adjacente et le circuit d'alimentation (41), dans la première configuration,
∘ une deuxième paire (110') de connecteurs électriques (11) disposée selon un deuxième plan et configurée pour raccorder électriquement en série l'unité de stockage (2) l'au moins une unité de stockage (2) adjacente et le circuit d'alimentation (41), dans la première configuration, le premier plan et le deuxième étant distincts, et
- le deuxième jeu (111) de connecteurs (11) ne raccorde pas électriquement au moins l'un parmi le pôle positif (20) et le pôle négatif (21) de l'unité de stockage (2) et comprend :
∘ au moins un connecteur électrique (111) configuré, dans la deuxième configuration, pour raccorder électriquement en parallèle l'au moins une unité de stockage (2) adjacente au circuit d'alimentation (41) par au moins deux contacts électriques (1110), les au moins deux contacts électriques (1110) étant disposées dans le premier plan,
∘ au moins un connecteur électrique configuré, dans la deuxième configuration, pour raccorder électriquement en série l'au moins une unité de stockage (2) adjacente au circuit d'alimentation (41) par au moins deux contacts électriques (1110'), les au moins deux contacts électriques (1110') étant disposées dans le deuxième plan.

8. Système (1) selon l'une quelconque des revendications précédentes, le système (1) comprenant en outre un premier module (100) configuré pour coopérer avec un deuxième module (101) de façon à immobiliser l'unité de stockage (2) au moins dans sa première position.

9. Système (1) selon l'une quelconque des revendications précédentes, dans lequel le système de connexion (1) est configuré de sorte que le passage de l'une parmi la première configuration et la deuxième configuration, à l'autre parmi la première configuration et la deuxième configuration, est induit par l'exercice d'une force s'exerçant sur au moins l'un parmi la paroi (12) du système de connexion (1) et l'unité de stockage (2), de façon à induire un déplacement en translation de l'unité de stockage (2) entre sa première et sa deuxième position, de préférence le système comprend un actionneur (13) configuré pour exercer ladite force lorsqu'une température d'un environnement de l'unité de stockage (2) dépasse une température seuil prédéterminée.

10. Unité de stockage (2) d'énergie électrique comprenant le système de connexion (1) selon l'une quelconque des revendications précédentes.

11. Unité de stockage (2) selon la revendication précédente, dans laquelle le système de connexion (1) comprend une paroi (12) formant un godet de l'unité de stockage (2).

12. Unité de stockage (2) selon la revendication 10, dans laquelle le système de connexion (1) comprend une paroi (12) formant une gaine de l'unité de stockage (2), de préférence la paroi (12) comprend des éléments de fixation (14) de la paroi (12) sur l'unité de stockage (2), de façon à être montée amovible sur l'unité de stockage (2).

13. Ensemble d'alimentation électrique (3) comprenant plusieurs unités de stockage, au moins une unité de stockage étant une unité de stockage (2) selon l'une quelconque des trois revendications précédentes, de préférence chaque unité de stockage (2) comprend un système de connexion (1).

14. Dispositif d'alimentation (4) électrique comprenant au moins une unité de stockage (1) selon l'une quelconque des revendications 10 à 12, un circuit d'alimentation (41) et un support (40) configuré pour recevoir l'au moins une unité de stockage (2), de préférence le support (40) comprend une butée (401) configurée pour former une surface d'appui de l'unité de stockage (2) dans sa deuxième position.

15. Dispositif d'alimentation (4) selon la revendication précédente, comprenant un capteur (42) apte à mesurer une température dans le dispositif d'alimentation et/ou apte à déterminer un état d'un actionneur (13), le système comprenant un actionneur (13) configuré pour exercer une force s'exerçant sur le système de connexion (1) de façon à induire un déplacement en translation de l'unité de stockage (2) entre sa première et sa deuxième position lorsqu'une température d'un environnement de l'unité de stockage dépasse une valeur seuil.
